(19) Europäisches Patentamt / European Patent Office / Office européen des brevets

(11) **EP 4 422 163 B1**

(12) **EUROPEAN PATENT SPECIFICATION**

(45) Date of publication and mention
of the grant of the patent:
**27.05.2026 Bulletin 2026/22**

(21) Application number: **22883430.5**

(22) Date of filing: **12.10.2022**

(51) International Patent Classification (IPC):
*H04N 5/14* (2006.01)      *G06T 5/60* (2024.01)
*G06T 7/00* (2017.01)      *G06N 3/045* (2023.01)
*G10L 25/60* (2013.01)      *G06N 10/00* (2022.01)
*G06T 5/00* (2024.01)      *G06N 3/08* (2023.01)
*G06T 5/40* (2006.01)      *G10L 25/30* (2013.01)
*G06N 20/00* (2019.01)

(52) Cooperative Patent Classification (CPC):
**G10L 25/60; G06N 3/045; G06N 3/08; G06N 20/00;
G06T 5/60; G10L 25/30;** G06T 2207/10016;
G06T 2207/20081; G06T 2207/20084;
G06T 2207/30168

(86) International application number:
**PCT/JP2022/037996**

(87) International publication number:
**WO 2023/068126 (27.04.2023 Gazette 2023/17)**

(54) **LEARNING DEVICE, DATA PROCESSING DEVICE, PARAMETER GENERATION DEVICE, LEARNING METHOD, DATA PROCESSING METHOD, AND PARAMETER GENERATION METHOD**

LERNVORRICHTUNG, DATENVERARBEITUNGSVORRICHTUNG, PARAMETERERZEUGUNGSVORRICHTUNG, LERNVERFAHREN, DATENVERARBEITUNGSVERFAHREN UND PARAMETERERZEUGUNGSVERFAHREN

DISPOSITIF ET PROCÉDÉ D'APPRENTISSAGE, DISPOSITIF ET PROCÉDÉ DE TRAITEMENT DE DONNÉES, DISPOSITIF ET PROCÉDÉ DE GÉNÉRATION DE PARAMÈTRES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.10.2021 JP 2021171140**

(43) Date of publication of application:
**28.08.2024 Bulletin 2024/35**

(73) Proprietor: **Sony Group Corporation**
**Tokyo 108-0075 (JP)**

(72) Inventors:
• **INAISHI, Daisuke**
**Tokyo 108-0075 (JP)**
• **ARAI, Hiroaki**
**Tokyo 108-0075 (JP)**
• **HIRAI, Yuma**
**Tokyo 108-0075 (JP)**
• **KOSAKA, Junichi**
**Tokyo 108-0075 (JP)**
• **KANAO, Rinna**
**Tokyo 108-0075 (JP)**

(74) Representative: **D Young & Co LLP**
**3 Noble Street**
**London EC2V 7BQ (GB)**

(56) References cited:
WO-A1-2020/209337      WO-A1-2020/261503
WO-A1-2020/261503      JP-A- 2021 089 654
US-A1- 2019 355 376      US-B2- 10 499 056

- LI QIAOHONG ET AL: "Blind Image Quality Assessment Using Statistical Structural and Luminance Features", IEEE TRANSACTIONS ON MULTIMEDIA, IEEE, USA, vol. 18, no. 12, 1 December 2016 (2016-12-01), pages 2457 - 2469, XP011634451, ISSN: 1520-9210, [retrieved on 20161115], DOI: 10.1109/TMM.2016.2601028

- CAMPBELL D ET AL: "Audio quality assessment techniques-A review, and recent developments", SIGNAL PROCESSING, ELSEVIER, AMSTERDAM, NL, vol. 89, no. 8, 1 August 2009 (2009-08-01), pages 1489 - 1500, XP026045340, ISSN: 0165-1684, [retrieved on 20090304], DOI: 10.1016/J.SIGPRO.2009.02.015

## Description

Field

The present disclosure relates to a learning device, a data processing device, a parameter generation device, a learning method, a data processing method, and a parameter generation method.

Background

In order to improve "image quality" having brightness, contrast, saturation, tone, definition, etc. as elements, an image is processed using a parameter that changes image quality (hereinafter, occasionally referred to as an "image quality parameter").

Conventionally, the adjustment of an image quality parameter used for processing of an image has been performed by a skilled technician having an eye for detailed analysis. The skilled technician observes how image quality changes depending on variously changed image quality parameters, and thereby determines an optimum image quality parameter used for processing of an image.

Citation List

Patent Literature

Patent Literature 1: JP 2015-088805 A
Patent Literature 2: WO 2020/261503 A

Other prior art is provided in US10499056B and US2019/355376A.

Summary

Technical Problem

As the image quality parameter, there are various image quality parameters that change brightness, contrast, saturation, tone, definition, etc. When, for example, there are 28 kinds of image quality parameters as the image quality parameter and the value of each of the 28 kinds of image quality parameters can be adjusted in 255 levels, the total number of combinations of image quality parameters is an enormous number of "$2.4 \times 10^{67}$". Even for a skilled technician, it is difficult to determine an optimum combination from among such an enormous number of combinations of image quality parameters by human eyes.

Further, the optimum image quality parameter varies with images, and thus an optimum image quality parameter for an image is not necessarily most suitable for other images. Thus, if one image quality parameter is fixedly applied to a plurality of images, satisfactory image quality may not be obtained.

Also for the image of each frame of a moving image, the optimum image quality parameter varies with images like in still images. Further, also for sounds, in order to improve "sound quality", a sound is processed using a parameter that changes sound quality (hereinafter, occasionally referred to as a "sound quality parameter"). Multimedia data that can be handled by a computer is roughly divided into image data, moving image data, and sound data. Hereinafter, the image quality parameter and the sound quality parameter may be referred to as "quality parameters".

Thus, the present disclosure proposes a technology capable of improving the quality of multimedia data while reducing labor required to determine suitable quality parameters.

Solution to Problem

A learning device in the present disclosure is provided in claim 1.

Brief Description of Drawings

FIG. 1 is a diagram illustrating a configuration example of an image processing system according to a first embodiment of the present disclosure.

FIG. 2 is a diagram illustrating a configuration example of an image learning device according to the first embodiment of the present disclosure.

FIG. 3 is a diagram illustrating a configuration example of an image processing device according to the first embodiment of the present disclosure.

FIG. 4 is a diagram illustrating an example of a processing procedure in the image processing system according to the first embodiment of the present disclosure.

FIG. 5 is a diagram illustrating an example of the processing procedure in the image processing system according to the first embodiment of the present disclosure.

FIG. 6 is a diagram illustrating an example of the processing procedure in the image processing system according to the first embodiment of the present disclosure.

FIG. 7 is a diagram illustrating an example of quantitative evaluation according to the first embodiment of the present disclosure.

FIG. 8 is a diagram illustrating an example of quantitative evaluation according to the first embodiment of the present disclosure.

FIG. 9 is a diagram illustrating a configuration example of an image processing system according to a second embodiment of the present disclosure.

FIG. 10 is a diagram illustrating a configuration example of an image learning device according to the second embodiment of the present disclosure.

FIG. 11 is a diagram illustrating an example of a processing procedure in the image processing system according to the second embodiment of the present disclosure.

FIG. 12 is a diagram illustrating an example of the processing procedure in the image processing system according to the second embodiment of the present disclosure.

FIG. 13 is a diagram illustrating an operation example of a choice unit according to the second embodiment of the present disclosure.

FIG. 14 is a diagram illustrating a configuration example of a sound processing system according to a third embodiment of the present disclosure.

FIG. 15 is a diagram illustrating a configuration example of a sound learning device according to the third embodiment of the present disclosure.

FIG. 16 is a diagram illustrating a configuration example of a sound processing device according to the third embodiment of the present disclosure.

FIG. 17 is a diagram illustrating an example of a processing procedure in the sound processing system according to the third embodiment of the present disclosure.

FIG. 18 is a diagram illustrating an example of the processing procedure in the sound processing system according to the third embodiment of the present disclosure.

FIG. 19 is a diagram illustrating an example of the processing procedure in the sound processing system according to the third embodiment of the present disclosure.

FIG. 20 is a diagram illustrating an example of quantitative evaluation according to the third embodiment of the present disclosure.

FIG. 21 is a diagram illustrating a configuration example of a sound processing system according to a fourth embodiment of the present disclosure.

FIG. 22 is a diagram illustrating a configuration example of a sound learning device according to the fourth embodiment of the present disclosure.

FIG. 23 is a diagram illustrating an example of a processing procedure in the sound processing system according to the fourth embodiment of the present disclosure.

FIG. 24 is a diagram illustrating an example of the processing procedure in the sound processing system according to the fourth embodiment of the present disclosure.

FIG. 25 is a diagram illustrating an operation example of a choice unit according to the fourth embodiment of the present disclosure.

Description of Embodiments

Hereinbelow, embodiments of the present disclosure are described based on the drawings. In the following embodiments, the same parts or the same pieces of processing may be denoted by the same reference numerals, and a repeated description may be omitted.

The present disclosure is described according to the following item order.

[First embodiment]

<Configuration of the image processing system>
<Configuration of the image learning device>
<Configuration of the image processing device>
<Processing procedure in the image processing system>
<Quantitative evaluation>
<First image quality evaluation example>
<Second image quality evaluation example>

[Second embodiment]

<Configuration of the image processing system>
<Configuration of the image learning device>
<Processing procedure in the image processing system>
<Operation of the choice unit>

[Third embodiment]

<Configuration of the sound processing system>
<Configuration of the sound learning device>
<Configuration of the sound processing device>
<Processing procedure in the sound processing system>
<Quantitative evaluation>

[Fourth embodiment]

<Configuration of the sound processing system>
<Configuration of the sound learning device>
<Processing procedure in the sound processing system>
<Operation of the choice unit>

[Fifth embodiment]
<Hardware configuration>
[Effects of the disclosed technology]

[First embodiment]

In a first embodiment, the technology of the present disclosure is described using image data as an example of multimedia data. The first embodiment can be applied also to image data of each frame included in moving image data.

<Configuration of the image processing system>

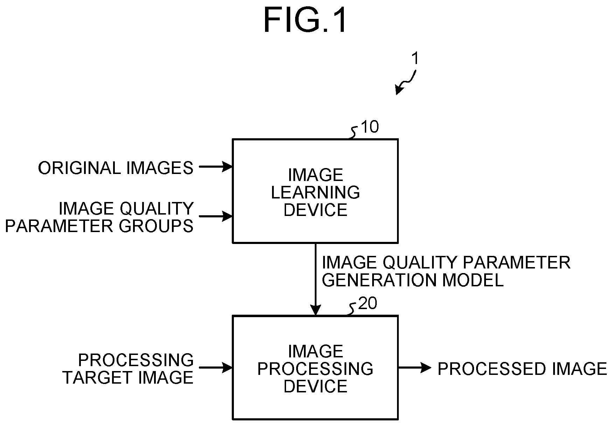

FIG. 1 is a diagram illustrating a configuration example of an image processing system according to the first embodiment of the present disclosure. In FIG. 1, an image processing system 1 includes an image learning device 10 and an image processing device 20. The image learning device 10 uses original images and image quality parameter groups to perform machine learning and thereby generates an image quality parameter generation model, and outputs the generated image quality parameter generation model to the image processing device 20. The image processing device 20 processes a processing target image by using the image quality parameter generation model inputted from the image learning device 10, and thereby acquires a processed image.

<Configuration of the image learning device>

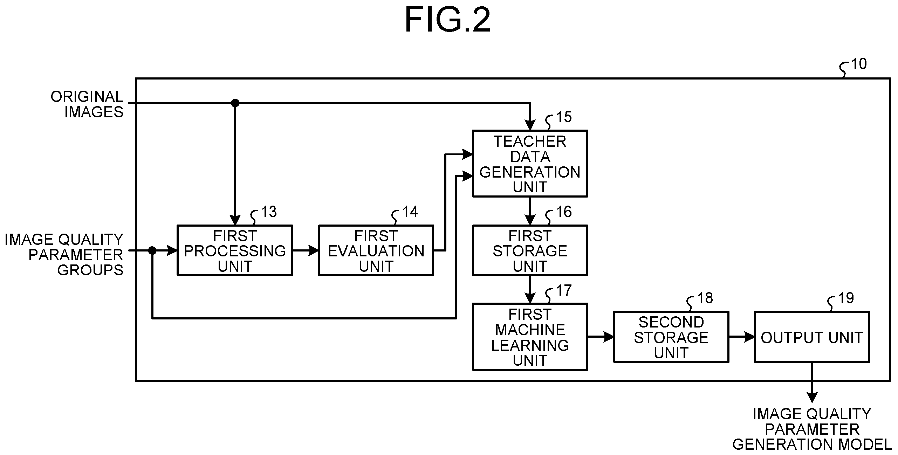

FIG. 2 is a diagram illustrating a configuration example of the image learning device according to the first embodiment of the present disclosure. In FIG. 2, the image learning device 10 includes a first processing unit 13, a first evaluation unit 14, a teacher data generation unit 15, a first storage unit 16, a first machine learning unit 17, a second storage unit 18, and an output unit 19.

<Configuration of the image processing device>

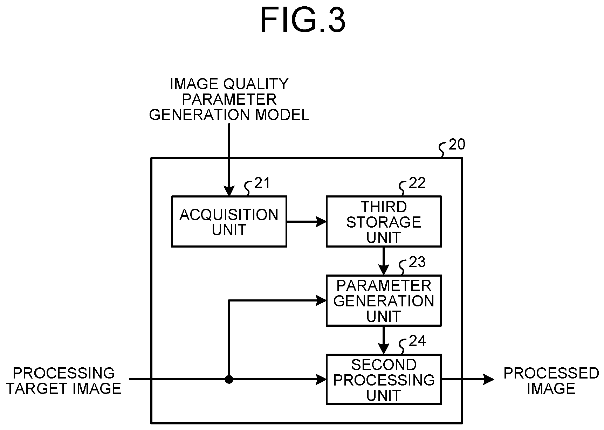

FIG. 3 is a diagram illustrating a configuration example of the image processing device according to the first embodiment of the present disclosure. In FIG. 3, the image processing device 20 includes an acquisition unit 21, a third storage unit 22, a parameter generation unit 23, and a second processing unit 24.

<Processing procedure in the image processing system>

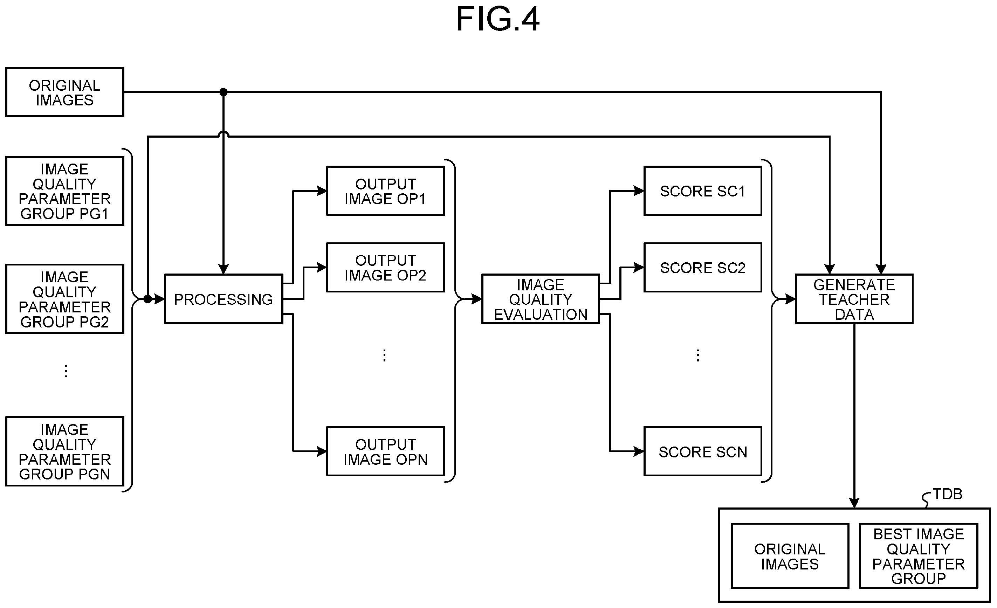

FIGS. 4, 5, and 6 are diagrams illustrating an example of a processing procedure in the image processing system according to the first embodiment of the present disclosure.

First, an original image is inputted to the first processing unit 13 and the teacher data generation unit 15, and image quality parameter groups are inputted to the first processing unit 13 and the teacher data generation unit 15.

Here, as illustrated in FIG. 4, an original image and, for example, N image quality parameter groups PG1 to PGN are inputted to the first processing unit 13. Each of image quality parameter groups PG1 to PGN is a combination of a plurality of kinds of image quality parameters. For example, each of image quality parameter groups PG1 to PGN is formed of four kinds of image quality parameters, namely, image quality parameter PA for changing brightness, image quality parameter PB for changing contrast, image quality parameter PC for changing saturation, and image quality parameter PD for changing tone. The value of at least one of image quality parameters PA, PB, PC, and PD is different between image quality parameter groups PG1 to PGN. That is, image quality parameter groups PG1 to PGN are image quality parameters having values different from each other. The first processing unit 13 uses each of image quality parameter groups PG1 to PGN to process the original image and thereby acquires output images OP1 to OPN having image qualities different from each other, and outputs the acquired output images OP1 to OPN to the first evaluation unit 14. Output image OP1 is an image obtained by processing the original image by using image quality parameter group PG1, output image OP2 is an image obtained by processing the original image by using image quality parameter group PG2, and output image OPN is an image obtained by processing the original image by using image quality parameter group PGN. That is, output image OP1 corresponds to image quality parameter group PG1, output image OP2 corresponds to image quality parameter group PG2, and output image OPN corresponds to image quality parameter group PGN.

Each of output images OP1 to OPN is inputted to the first evaluation unit 14. That is, the input images inputted to the first evaluation unit 14 are output images OP1 to OPN. The first evaluation unit 14 performs quantitative evaluation on each of output images OP1 to OPN, and thereby evaluates the image quality of each of output images OP1 to OPN. The first evaluation unit 14 performs, on each of output images OP1 to OPN, quantitative evaluation based on a predetermined point of view on image quality. Then, the first evaluation unit 14 outputs, to the teacher data generation unit 15, scores SC1 to SCN that are the evaluation results of output images OP1 to OPN. Score SC1 indicates the score of output image OP1, score SC2 indicates the score of output image OP2, and score SCN indicates the score of output image OPN.

The original image, image quality parameter groups PG1 to PGN, and scores SC1 to SCN are inputted to the teacher data generation unit 15. As above, output images OP1 to OPN correspond to image quality parameter groups PG1 to PGN, respectively, and scores SC1 to SCN correspond to output images OP1 to OPN, respectively. Thus, scores SC1 to SCN correspond to image quality parameter groups PG1 to PGN, respectively. That is, it can be said that score SC1 is the evaluation result of image quality parameter group PG1, score SC2 is the evaluation result of image quality parameter group PG2, and score SCN is the evaluation result of image quality parameter group PGN.

Thus, the teacher data generation unit 15 selects a score corresponding to the highest evaluation result (hereinafter, occasionally referred to as a "best image quality score") from among the inputted scores SC1 to SCN. For example, the teacher data generation unit 15 selects the largest value among scores SC1 to SCN as the best image quality score. Next, the teacher data generation unit 15 selects an image quality parameter group corresponding to the best image quality score (hereinafter, occasionally referred to as a "best image quality parameter group") from among image quality parameter groups PG1 to PGN. Since the best image quality parameter group is an image quality parameter group corresponding to the best image quality score, it can be said that the best image quality parameter group is an image quality parameter group whereby the highest image quality can be obtained when the original image is processed, that is, an image quality parameter group most suitable for the processing of the original image. Then, the teacher data generation unit 15 associates the original image and the best image quality parameter group with each other, generates teacher data TDB including the original image and the best image quality parameter group, and outputs the generated teacher data TDB to the first storage unit 16. The first storage unit 16 stores the teacher data TDB generated by the teacher data generation unit 15.

Thus, in FIG. 4, M sets of teacher data TDB including original images different from each other and the best image quality parameter groups different from each other can be mechanically (automatically) mass-produced by simply sequentially inputting M original images different from each other to the image learning device 10.

Values of the best image quality parameter group selected by the teacher data generation unit 15 may be manually adjusted by an operator.

Further, instead of generating teacher data TDB including an original image and the best image quality parameter group, the teacher data generation unit 15 may generate teacher data TDB including a feature value of an original image and the best image quality parameter group. Examples of the feature value of the original image include an average, a variance, a histogram, and the like of the pixel values of the original image.

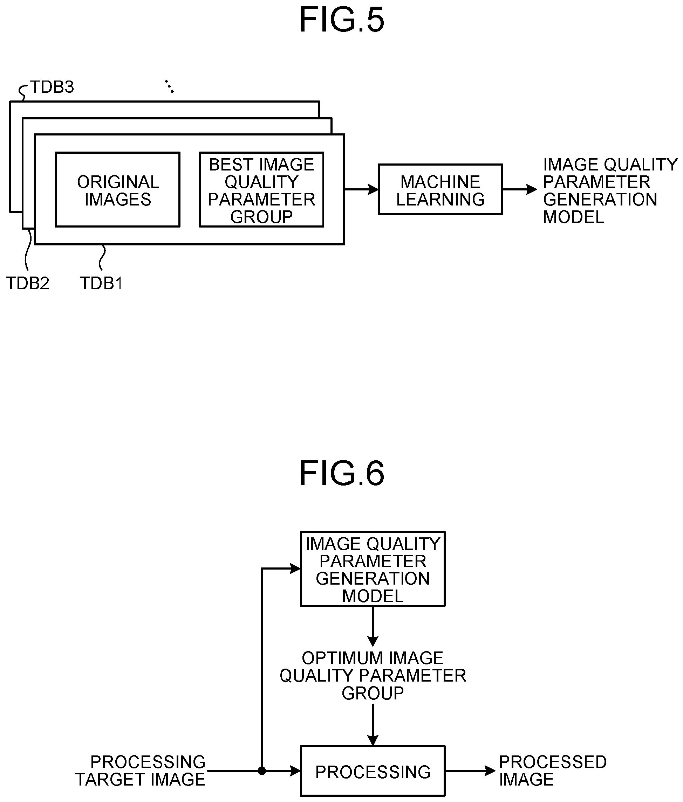

As illustrated in FIG. 5, the first machine learning unit 17 performs machine learning using a plurality of sets of teacher data TDB including sets of teacher data TDB1 to TDB3 stored in the first storage unit 16, and thereby generates an "image quality parameter generation model" as a learned model. Deep learning such as a CNN (convolutional neural network), for example, is used as machine learning when generating the image quality parameter generation model. Since each of the sets of teacher data TDB1 to TDB3 includes an original image and the best image quality parameter group for the original image, the image quality parameter generation model generated by the first machine learning unit 17 is a learned model that, when a processing target image is inputted, outputs an image quality parameter group most suitable for the processing of the processing target image (hereinafter, occasionally referred to as an "optimum image quality parameter group").

The first machine learning unit 17 outputs the image quality parameter generation model generated as illustrated in FIG. 5 to the second storage unit 18, and the second storage unit 18 stores the image quality parameter generation model generated by the first machine learning unit 17.

The output unit 19 acquires the image quality parameter generation model stored in the second storage unit 18, and outputs the acquired image quality parameter generation model to the image processing device 20. The output of the image quality parameter generation model from the image learning device 10 to the image processing device 20 is performed in accordance with, for example, an instruction of an operator to the image learning device 10.

In the image processing device 20, the acquisition unit 21 acquires the image quality parameter generation model outputted from the image learning device 10, and outputs the acquired image quality parameter generation model to the third storage unit 22. The acquisition of the image quality parameter generation model by the image processing device 20 from the image learning device 10 is performed in accordance with, for example, an instruction of an operator to the image processing device 20.

The third storage unit 22 stores the image quality parameter generation model acquired by the acquisition unit 21.

A processing target image is inputted to the parameter generation unit 23 and the second processing unit 24.

As illustrated in FIG. 6, the parameter generation unit 23 to which the processing target image is inputted uses the image quality parameter generation model stored in the third storage unit 22 to generate an optimum image quality parameter group (that is, an image quality parameter group whereby the highest image quality can be obtained when the processing target image is processed), and outputs the generated optimum image quality parameter group to the second processing unit 24.

Then, as illustrated in FIG. 6, the second processing unit 24 uses the optimum image quality parameter group to process the processing target image and thereby acquires a processed image, and outputs the acquired processed image. Since the image quality parameter group used when the processing target image is processed in the second processing unit 24 is the optimum image quality parameter group, the processed image can obtain the highest image quality.

<Quantitative evaluation>

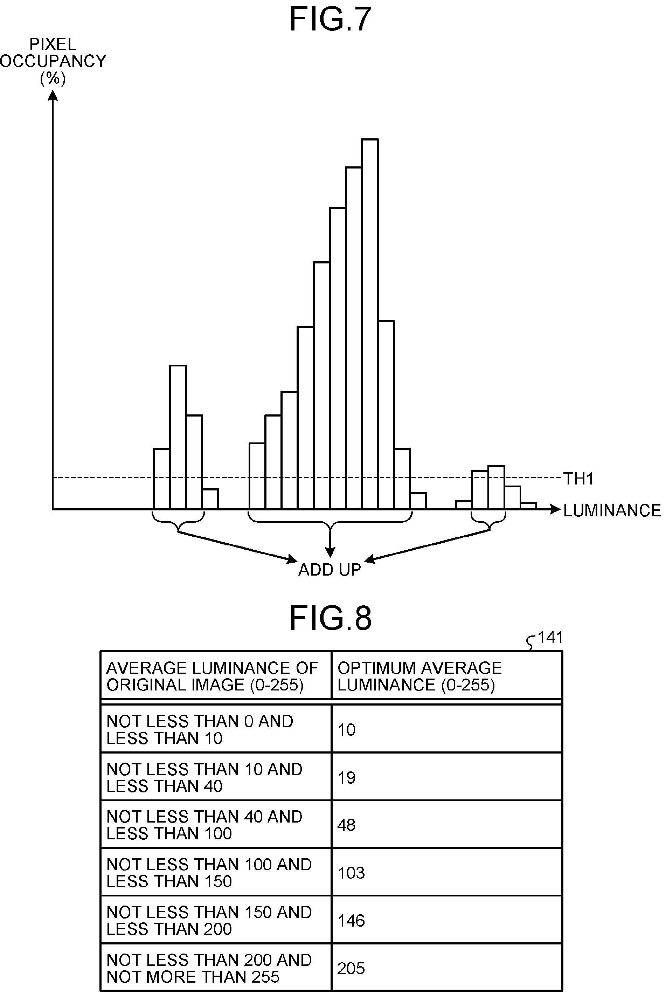

FIGS. 7 and 8 are diagrams illustrating examples of quantitative evaluation according to the first embodiment of the present disclosure. In the following, quantitative evaluation of image quality performed by the first evaluation unit 14 is described using two evaluation examples of a first image quality evaluation example and a second image quality evaluation example.

<First image quality evaluation example (FIG. 7)>

The first image quality evaluation example is an evaluation example based on a predetermined point of view that "a processed image having the highest image quality is an image having no bias in luminance distribution" (hereinafter, occasionally referred to as a "first point of view").

As illustrated in FIG. 7, the first evaluation unit 14 generates, for each of output images OP1 to OPN, a histogram in which luminance is divided into 256 levels (hereinafter, occasionally referred to as a "luminance histogram"). The luminance histogram indicates a luminance distribution in each of output images OP1 to OPN. Next, the first evaluation unit 14 counts the number of pixels (hereinafter, occasionally referred to as "the number of bin pixels") included in each of the 256 areas (hereinafter, occasionally referred to as "luminance bins") in the luminance histogram, for each of the 256 luminance bins. Next, the first evaluation unit 14 calculates, for each luminance bin, the occupancy of the number of bin pixels with respect to the total number of pixels included in one output image (hereinafter, occasionally referred to as "pixel occupancy"). Next, the first evaluation unit 14 adds up the number of luminance bins of which the pixel occupancy is not less than a threshold TH1 (hereinafter, occasionally referred to as "the number of high occupancy bins"). The first evaluation unit 14 adds up the number of high occupancy bins for each of output images OP1 to OPN. Then, the first evaluation unit 14 sets the numbers of high occupancy bins of output images OP1 to OPN as the scores SC1 to SCN of output images OP1 to OPN, respectively. The maximum value of the number of high occupancy bins is "256".

In the evaluation based on the first point of view, for example, in the case where the pixels are evenly distributed in all the luminance bins, the number of high occupancy bins is large, and thus the score for the output image is a large value. Conversely, in the case where almost all the pixels included in one output image are concentrated in 10 luminance bins in a central portion of the luminance histogram, the score for the output image is a small value of "10".

<Second image quality evaluation example (FIG. 8)>

The second image quality evaluation example is an evaluation example based on a predetermined point of view that "a processed image having the highest image quality is an image having optimum brightness" (hereinafter, occasionally referred to as a "second point of view").

In the second image quality evaluation example, an original image is inputted also to the first evaluation unit 14 (illustration omitted). The first evaluation unit 14 calculates the average value of luminance of all the pixels included in one original image (hereinafter, occasionally referred to as "original image average luminance"). Further, in the first evaluation unit 14, a luminance table 141 like that illustrated in FIG. 8 is set in advance. In the luminance table 141, a plurality of ranges of original image average luminance and an optimum average value of luminance of all the pixels included in one image (hereinafter, occasionally referred to as "optimum average luminance") are set while these are associated with each other. The luminance table 141 is created by a skilled technician having an eye for detailed analysis. Thus, the first evaluation unit 14 refers to the luminance table 141 on the basis of an original image average luminance, and acquires, from the luminance table 141, an optimum average luminance corresponding to the original image average luminance. For example, when the original image average luminance is "35", the first evaluation unit 14 acquires, from the luminance table 141, "19" as an optimum average luminance. Next, the first evaluation unit 14 calculates, for each of output images OP1 to OPN, the average value of luminance of all the pixels included in one output image (hereinafter, occasionally referred to as "output image average luminance"). Then, for each of output images OP1 to OPN, the first evaluation unit 14 calculates the absolute value of the difference between the optimum average luminance and the output image average luminance according to Formula (1), as each of scores SC1 to SCN. Thus, in the second image quality evaluation example, an output image having a smaller score value is an image more in line with the second point of view.

$$\text{Score} = \text{abs(optimum average luminance - output image average luminance)} \qquad (1)$$

Hereinabove, the first embodiment is described.

[Second embodiment]

In a second embodiment, like in the first embodiment, the technology of the present disclosure is described using image data as an example of multimedia data. The second embodiment can be applied also to image data of each frame included in moving image data, similarly to the first embodiment. In the following, differences from the first embodiment are described.

<Configuration of the image processing system>

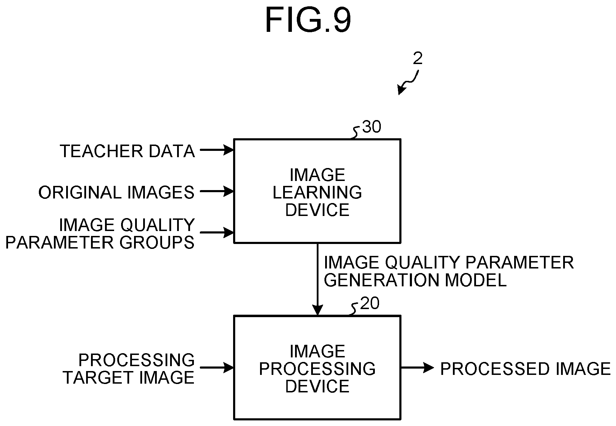

FIG. 9 is a diagram illustrating a configuration example of an image processing system according to the second embodiment of the present disclosure. In FIG. 2, an image processing system 2 includes an image learning device 30 and an image processing device 20. The image learning device 30 uses teacher data, original images, and image quality parameter groups to perform machine learning and thereby generates an image quality parameter generation model, and outputs the generated image quality parameter generation model to the image processing device 20.

<Configuration of the image learning device>

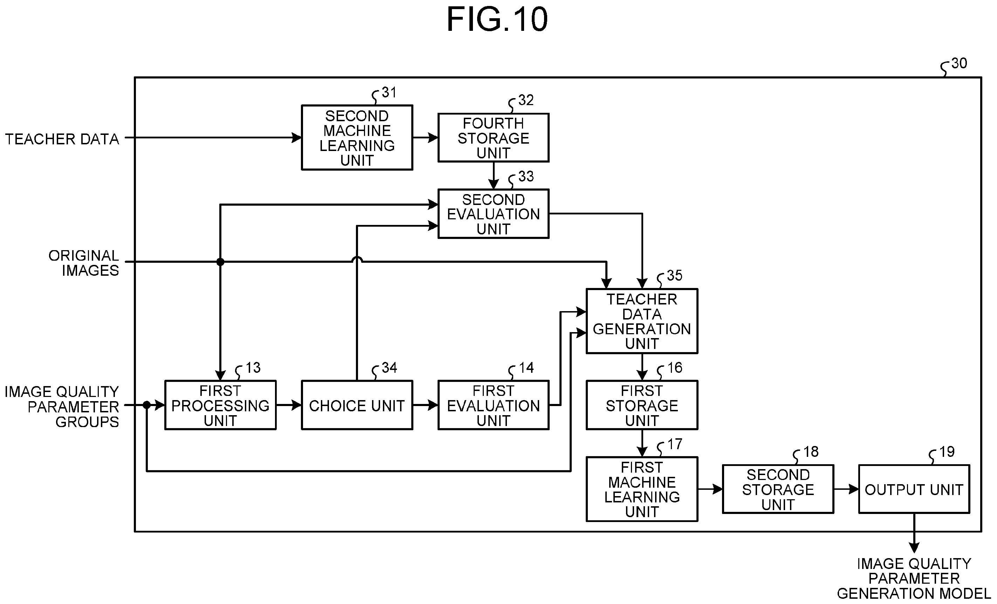

FIG. 10 is a diagram illustrating a configuration example of the image learning device according to the second embodiment of the present disclosure. In FIG. 10, the image learning device 30 includes a first processing unit 13, a first evaluation unit 14, a first storage unit 16, a first machine learning unit 17, a second storage unit 18, and an output unit 19. The image learning device 30 further includes a second machine learning unit 31, a fourth storage unit 32, a second evaluation unit 33, a choice unit 34, and a teacher data generation unit 35.

<Processing procedure in the image processing system>

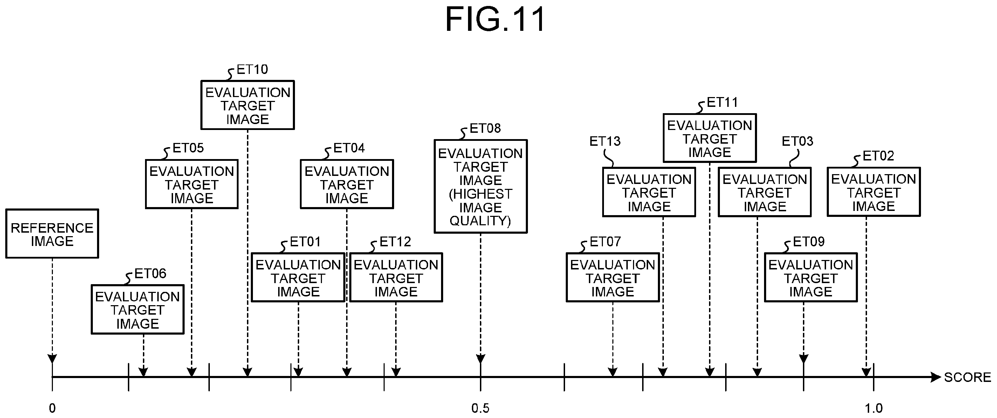

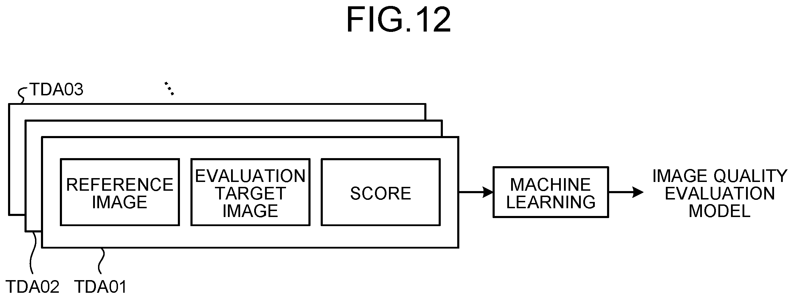

FIGS. 11 and 12 are diagrams illustrating an example of a processing procedure in the image processing system according to the second embodiment of the present disclosure.

Before the image learning device 30 performs processing in the image processing system 2, as illustrated in FIG. 11, a human evaluator evaluates an evaluation target image while visually comparing a reference image and the evaluation target image.

First, the evaluator manually adjusts image quality parameters, and applies the manually adjusted various image quality parameters to the reference image. By the reference image being processed using the manually adjusted various image quality parameters, evaluation target images, which are images after processing, are obtained. FIG. 11 illustrates, as an example, a case where evaluation target images ET01 to ET13 are obtained as a result of the reference image being processed with image quality parameters of values different from each other.

Then, the evaluator sets the score of the reference image to "0"; on the other hand, the evaluator adjusts the image quality parameters in all the obtained evaluation target images so that image quality gradually changes, and sets the score of an evaluation target image visually determined to have the highest image quality to "0.5". Further, the evaluator excessively adjusts the image quality parameters, and sets the score of an evaluation target image visually determined to have the largest degree of change with respect to the reference image to "1.0". In this way, the evaluator evaluates each evaluation target image by scoring each evaluation target image according to subjectivity of the evaluator. As a result, for example, as illustrated in FIG. 11, a score of "0.31" is given to evaluation target image ET01, "0.99" is given to evaluation target image ET02, "0.84" is given to evaluation target image ET03, "0.36" is given to evaluation target image ET04, "0.18" is given to evaluation target image ET05, "0.12" is given to evaluation target image ET06, and "0.66" is given to evaluation target image ET07. Further, for example, as illustrated in FIG. 11, a score of "0.50" is given to evaluation target image ET08, "0.90" is given to evaluation target image ET09, "0.25" is given to evaluation target image ET10, "0.78" is given to evaluation target image ET11, "0.41" is given to evaluation target image ET12, and "0.72" is given to evaluation target image ET13. That is, in the example illustrated in FIG. 11, while it is determined by subjectivity based on visual inspection by the evaluator that evaluation target image ET08 has the highest image quality, it is determined that, with the image quality of evaluation target image ET08 as the highest image quality, the image quality of the evaluation target image gradually decreases in the order of ET08 → ET12 → ET04 → ET01 → ET10 → ET05 → ET06. Further, it is determined that evaluation target images ET07, ET13, ET11, ET03, ET09, and ET02, which have scores larger than 0.5, have undergone excessive image quality adjustments.

Next, the evaluator associates the reference image, the evaluation target image, and the score with each other, and generates teacher data TDA including the reference image, the evaluation target image, and the score. Thus, for example, teacher data TDA01 includes the reference image, evaluation target image ET01, and "0.31", which is the score of evaluation target image ET01, while these are associated with each other; teacher data TDA02 includes the reference image, evaluation target image ET02, and "0.99", which is the score of evaluation target image ET02, while these are associated with each other; and teacher data TDA03 includes the reference image, evaluation target image ET03, and "0.84", which is the score of evaluation target image ET03, while these are associated with each other. Similarly, the sets of teacher data TDA04 to TDA13 include the reference image, evaluation target images ET04 to ET13, and the scores of evaluation target images ET04 to ET13 while these are associated with each other, respectively.

Then, the plurality of sets of teacher data TDA generated in this way are inputted to the second machine learning unit 31 (FIG. 10). As illustrated in FIG. 12, the second machine learning unit 31 performs machine learning using the plurality of sets of teacher data TDA, and thereby generates an "image quality evaluation model". Deep learning such as a CNN, for example, is used as machine learning when generating the image quality evaluation model.

The second machine learning unit 31 outputs the image quality evaluation model generated as illustrated in FIG. 12 to the fourth storage unit 32, and the fourth storage unit 32 stores the image quality evaluation model generated by the second machine learning unit 31.

After the storage of the image quality evaluation model in the fourth storage unit 32 is completed, an original image is inputted to the first processing unit 13, the teacher data generation unit 35, and the second evaluation unit 33, and image quality parameter groups are inputted to the first processing unit 13 and the teacher data generation unit 35.

Output images OP1 to OPN outputted from the first processing unit 13 are inputted to the choice unit 34. For each of output images OP1 to OPN, the choice unit 34 chooses, from the first evaluation unit 14 and the second evaluation unit 33, an evaluation unit that evaluates the image quality of the output image (hereinafter, occasionally referred to as an "image quality evaluation execution unit"). When the choice unit 34 has chosen the first evaluation unit 14 as the image quality evaluation execution unit, the choice unit 34 outputs, to the first evaluation unit 14, among output images OP1 to OPN, output images of which the image quality is to be evaluated by the first evaluation unit 14. On the other hand, when the choice unit 34 has chosen the second evaluation unit 33 as the image quality evaluation execution unit, the choice unit 34 outputs, to the second evaluation unit 33, among output images OP1 to OPN, output images of which the image quality is to be evaluated by the second evaluation unit 33. That is, the input images inputted to the first evaluation unit 14 are output images (hereinafter, occasionally referred to as "chosen images") chosen by the choice unit 34 among output images OP1 to OPN, and the input images inputted to the second evaluation unit 33 are the original image and chosen images.

The first evaluation unit 14 performs quantitative evaluation on each chosen image in a similar manner to the first embodiment, and thereby evaluates the image quality of each chosen image. Like in the first embodiment, the first evaluation unit 14 performs, on each chosen image, quantitative evaluation based on a predetermined point of view on image quality.

On the other hand, the second evaluation unit 33 evaluates each chosen image by using the image quality evaluation model stored in the fourth storage unit 32. The evaluation on the chosen image in the second evaluation unit 33 is performed in a similar manner to the evaluation by the evaluator on evaluation target images ET01 to ET13 like that described above.

That is, as described above, the evaluator relatively evaluated evaluation target images ET01 to ET13 with respect to the reference image, and scored each of evaluation target images ET01 to ET13. Evaluation target images ET01 to ET13 were images processed by image quality parameters different from each other being applied to the same reference image. Then, in the second machine learning unit 31, an image quality evaluation model was generated using teacher data TDA including reference images, evaluation target images, and the scores of the evaluation target images while these were associated with each other. On the other hand, an original image and a chosen image are inputted to the second evaluation unit 33, and the second evaluation unit 33 evaluates the chosen image by using the image quality evaluation model on the basis of the original image and the chosen image, and scores the chosen image. That is, the original image corresponds to the reference image in FIG. 11, and the chosen image corresponds to any of evaluation target images ET01 to ET13 in FIG. 11. Therefore, by evaluating the chosen image by using the image quality evaluation model generated by the second machine learning unit 31, the second evaluation unit 33 can evaluate the chosen image with a scale similar to that when the evaluator evaluated each of evaluation target images ET01 to ET13.

The second evaluation unit 33 outputs, to the teacher data generation unit 35, a score that is the evaluation result of the chosen image.

The original image, image quality parameter groups PG1 to PGN, and the scores of the chosen images (hereinafter, occasionally referred to as "chosen image scores") are inputted to the teacher data generation unit 35. The chosen image score is inputted to the teacher data generation unit 35 from either the first evaluation unit 14 or the second evaluation unit 33 chosen by the choice unit 34. As above, each of output images OP1 to OPN is distributed to either one of the first evaluation unit 14 and the second evaluation unit 33 by the choice unit 34; thus, the total number of chosen image scores is N, which is the same as the total number of output images. Hereinafter, the N chosen image scores may be referred to as SSC1 to SSCN.

The teacher data generation unit 35 selects the best image quality score from among the inputted chosen image scores SSC1 to SSCN. For example, the teacher data generation unit 35 selects the largest value among scores SSC1 to SSCN as the best image quality score. Next, the teacher data generation unit 35 selects the best image quality parameter group from among image quality parameter groups PG1 to PGN. Then, the teacher data generation unit 35 associates the original image and the best image quality parameter group with each other, generates teacher data TDB including the original image and the best image quality parameter group, and outputs the generated teacher data TDB to the first storage unit 16. The first storage unit 16 stores the teacher data TDB generated by the teacher data generation unit 35.

<Operation of the choice unit>

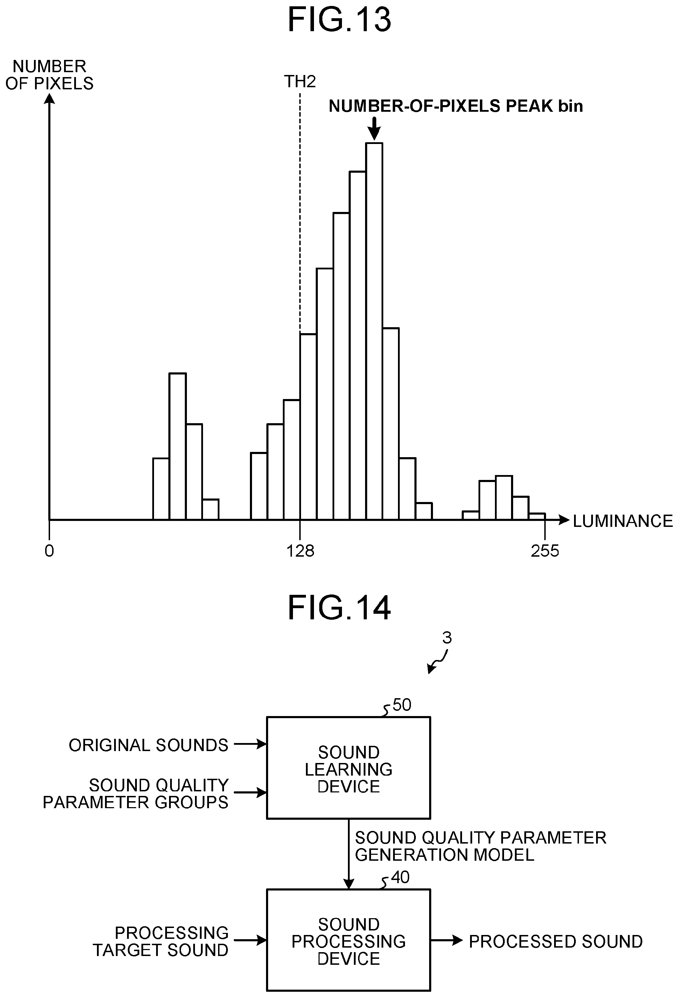

FIG. 13 is a diagram illustrating an operation example of the choice unit according to the second embodiment of the present disclosure.

As illustrated in FIG. 13, the choice unit 34 generates a luminance histogram for each of output images OP1 to OPN. Next, the choice unit 34 counts the number of bin pixels for each of 256 luminance bins. Next, the choice unit 34 determines a bin having the largest number of bin pixels (hereinafter, occasionally referred to as a "number-of-pixels peak bin") among the 256 luminance bins. Next, the choice unit 34 determines a luminance (hereinafter, occasionally referred to as a "peak luminance") to which the number-of-pixels peak bin corresponds among the 256 levels of luminance. Next, the choice unit 34 compares the peak luminance and a threshold TH2. The threshold TH2 is, for example, "128", which is a median value of the 256 levels of luminance. Then, when the peak luminance is not less than the threshold TH2, the output image is bright and the correct answer rate in the second evaluation unit 33 tends to be high, and thus the choice unit 34 chooses the second evaluation unit 33 as the image quality evaluation execution unit. On the other hand, when the peak luminance is less than the threshold TH2, the output image is dark and the correct answer rate in the second evaluation unit 33 tends to be low, and thus the choice unit 34 chooses the first evaluation unit 14 as the image quality evaluation execution unit.

Hereinabove, the second embodiment is described.

[Third embodiment]

In a third embodiment, the technology of the present disclosure is described using sound data as an example of multimedia data.

<Configuration of the sound processing system>

FIG. 14 is a diagram illustrating a configuration example of a sound processing system according to the third embodiment of the present disclosure. In FIG. 14, a sound processing system 3 includes a sound learning device 50 and a sound processing device 40. The sound learning device 50 uses original sounds and sound quality parameter groups to perform machine learning and thereby generates a sound quality parameter generation model, and outputs the generated sound quality parameter generation model to the sound processing device 40. The sound processing device 40 processes a processing target sound by using the sound quality parameter generation model inputted from the sound learning device 50, and thereby acquires a processed sound.

<Configuration of the sound learning device>

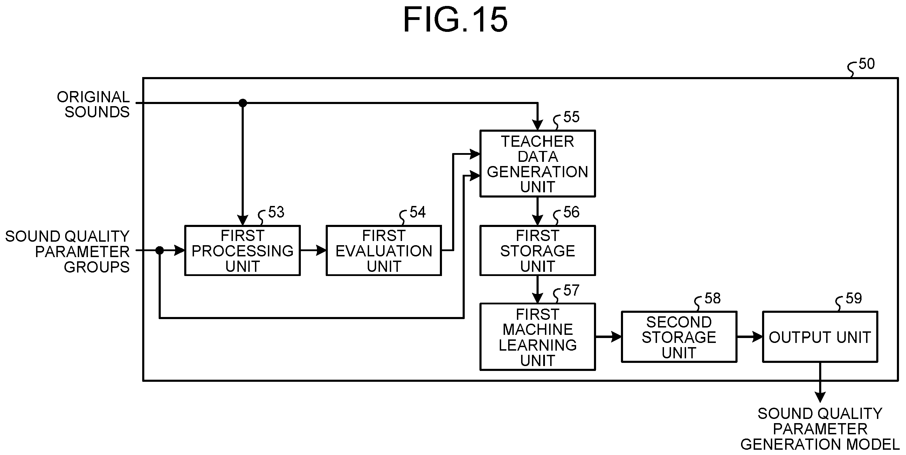

FIG. 15 is a diagram illustrating a configuration example of the sound learning device according to the third embodiment of the present disclosure. In FIG. 15, the sound learning device 50 includes a first processing unit 53, a first evaluation unit 54, a teacher data generation unit 55, a first storage unit 56, a first machine learning unit 57, a second storage unit 58, and an output unit 59.

<Configuration of the sound processing device>

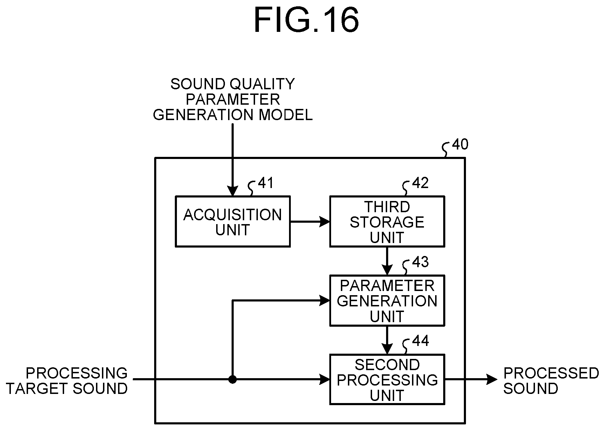

FIG. 16 is a diagram illustrating a configuration example of the sound processing device according to the third embodiment of the present disclosure. In FIG. 16, the sound processing device 40 includes an acquisition unit 41, a third storage unit 42, a parameter generation unit 43, and a second processing unit 44.

<Processing procedure in the sound processing system>

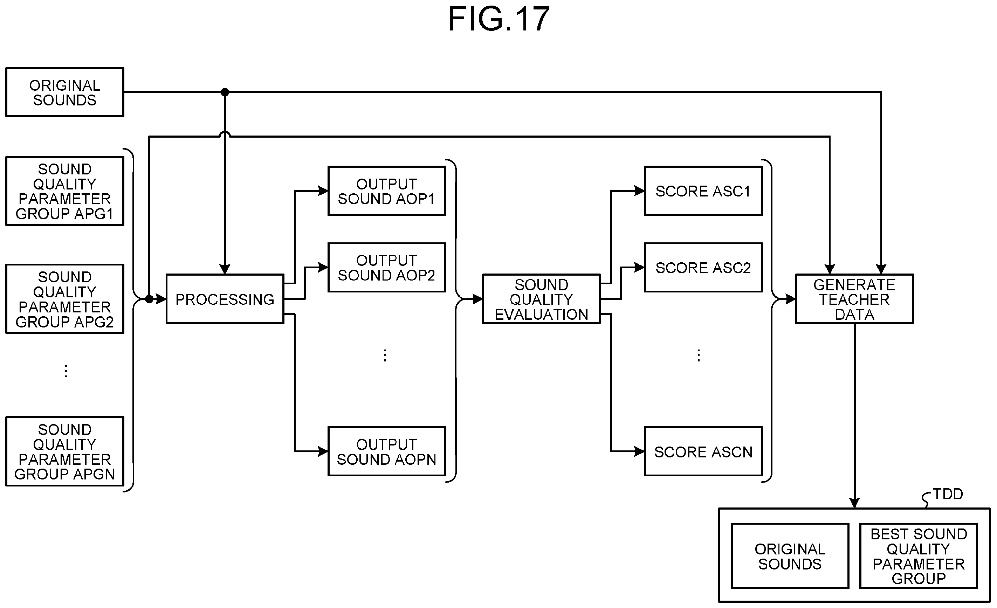

FIGS. 17, 18, and 19 are diagrams illustrating an example of a processing procedure in the sound processing system according to the third embodiment of the present disclosure.
First, an original sound is inputted to the first processing unit 53 and the teacher data generation unit 55, and sound quality parameter groups are inputted to the first processing unit 53 and the teacher data generation unit 55.
Here, as illustrated in FIG. 17, an original sound and, for example, N sound quality parameter groups APG1 to APGN are inputted to the first processing unit 53. Each of sound quality parameter groups APG1 to APGN is a combination of a plurality of kinds of sound quality parameters. For example, each of sound quality parameter groups APG1 to APGN is formed of four kinds of sound quality parameters, namely, sound quality parameter APA for changing frequency characteristics, sound quality parameter APB for changing the distortion factor, sound quality parameter APC for changing the S/N ratio, and sound quality parameter APD for changing the dynamic range. The value of at least one of sound quality parameters APA, APB, APC, and APD is different between sound quality parameter groups APG1 to APGN. That is, sound quality parameter groups APG1 to APGN are sound quality parameters having values different from each other. The first processing unit 53 uses each of sound quality parameter groups APG1 to APGN to process the original sound and thereby acquires output sounds AOP1 to AOPN having sound qualities different from each other, and outputs the acquired output sounds AOP1 to AOPN to the first evaluation unit 54. Output sound AOP1 is a sound obtained by processing the original sound by using sound quality parameter group APG1, output sound AOP2 is a sound obtained by processing the original sound by using sound quality parameter group APG2, and output sound AOPN is a sound obtained by processing the original sound by using sound quality parameter group APGN. That is, output sound AOP1 corresponds to sound quality parameter group APG1, output sound AOP2 corresponds to sound quality parameter group APG2, and output sound AOPN corresponds to sound quality parameter group APGN.
Each of output sounds AOP1 to AOPN is inputted to the first evaluation unit 54. That is, the input sounds inputted to the first evaluation unit 54 are output sounds AOP1 to AOPN. The first evaluation unit 54 performs quantitative evaluation on each of output sounds AOP1 to AOPN, and thereby evaluates the sound quality of each of output sounds AOP1 to AOPN. The first evaluation unit 54 performs, on each of output sounds AOP1 to AOPN, quantitative evaluation based on a predetermined point of view on sound quality. Then, the first evaluation unit 54 outputs, to the teacher data generation unit 55, scores ASC1 to ASCN that are the evaluation results of output sounds AOP1 to AOPN. Score ASC1 indicates the score of output sound AOP1, score ASC2 indicates the score of output sound AOP2, and score ASCN indicates the score of output sound AOPN.

The original sound, sound quality parameter groups APG1 to APGN, and scores ASC1 to ASCN are inputted to the teacher data generation unit 55. As above, output sounds AOP1 to AOPN correspond to sound quality parameter groups APG1 to APGN, respectively, and scores ASC1 to ASCN correspond to output sounds AOP1 to AOPN, respectively. Thus, scores ASC1 to ASCN correspond to sound quality parameter groups APG1 to APGN, respectively. That is, it can be said that score ASC1 is the evaluation result of sound quality parameter group APG1, score ASC2 is the evaluation result of sound quality parameter group APG2, and score ASCN is the evaluation result of sound quality parameter group APGN.

Thus, the teacher data generation unit 55 selects a score corresponding to the highest evaluation result (hereinafter, occasionally referred to as a "best sound quality score") from among the inputted scores ASC1 to ASCN. For example, the teacher data generation unit 55 selects the largest value among scores ASC1 to ASCN as the best sound quality score. Next, the teacher data generation unit 55 selects a sound quality parameter group corresponding to the best sound quality score (hereinafter, occasionally referred to as a "best sound quality parameter group") from among sound quality parameter groups APG1 to APGN. Since the best sound quality parameter group is a sound quality parameter group corresponding to the best sound quality score, it can be said that the best sound quality parameter group is a sound quality parameter group whereby the highest sound quality can be obtained when the original sound is processed, that is, a sound quality parameter group most suitable for the processing of the original sound. Then, the teacher data generation unit 55 associates the original sound and the best sound quality parameter group with each other, generates teacher data TDD including the original sound and the best sound quality parameter group, and outputs the generated teacher data TDD to the first storage unit 56. The first storage unit 56 stores the teacher data TDD generated by the teacher data generation unit 55.

Thus, in FIG. 17, M sets of teacher data TDD including original sounds different from each other and the best sound quality parameter groups different from each other can be mechanically (automatically) mass-produced by simply sequentially inputting M original sounds different from each other to the sound learning device 50.

Values of the best sound quality parameter group selected by the teacher data generation unit 55 may be manually adjusted by an operator.

Further, instead of generating teacher data TDD including an original sound and the best sound quality parameter group, the teacher data generation unit 55 may generate teacher data TDD including a feature value of an original sound and the best sound quality parameter group. Examples of the feature value of the original sound include a sound pressure, a fundamental frequency, a formant frequency, an MFCC (mel-frequency cepstral coefficient), and the like of the original sound.

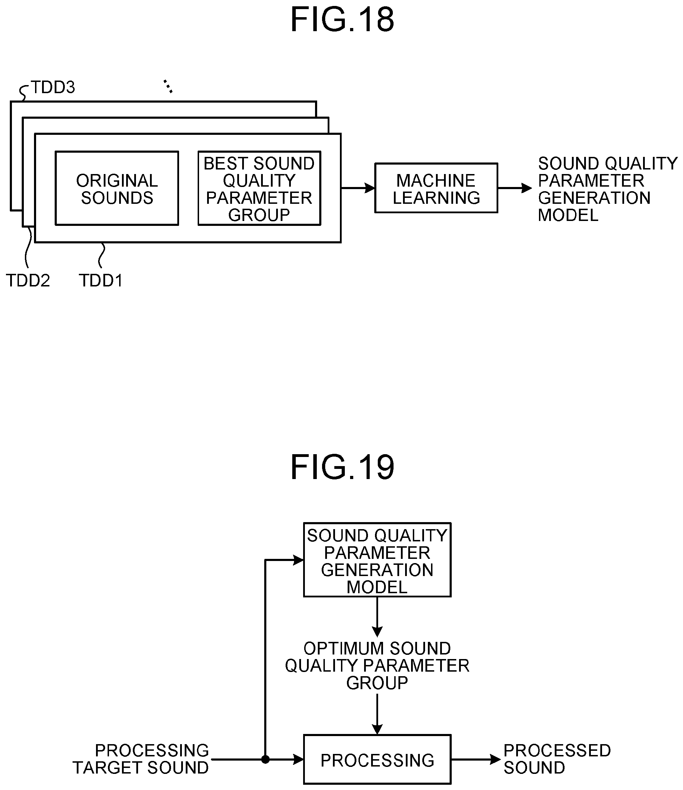

As illustrated in FIG. 18, the first machine learning unit 57 performs machine learning using a plurality of sets of teacher data TDD including sets of teacher data TDD1 to TDD3 stored in the first storage unit 56, and thereby generates a "sound quality parameter generation model" as a learned model. Deep learning such as a CNN (convolutional neural network) or an RNN (recurrent neural network), for example, is used as machine learning when generating the sound quality parameter generation model. Since each of the sets of teacher data TDD1 to TDD3 includes an original sound and the best sound quality parameter group for the original sound, the sound quality parameter generation model generated by the first machine learning unit 57 is a learned model that, when a processing target sound is inputted, outputs a sound quality parameter group most suitable for the processing of the processing target sound (hereinafter, occasionally referred to as an "optimum sound quality parameter group").

The first machine learning unit 57 outputs the sound quality parameter generation model generated as illustrated in FIG. 18 to the second storage unit 58, and the second storage unit 58 stores the sound quality parameter generation model generated by the first machine learning unit 57.

The output unit 59 acquires the sound quality parameter generation model stored in the second storage unit 58, and outputs the acquired sound quality parameter generation model to the sound processing device 40. The output of the sound quality parameter generation model from the sound learning device 50 to the sound processing device 40 is performed in accordance with, for example, an instruction of an operator to the sound learning device 50.

In the sound processing device 40, the acquisition unit 41 acquires the sound quality parameter generation model outputted from the sound learning device 50, and outputs the acquired sound quality parameter generation model to the third storage unit 42. The acquisition of the sound quality parameter generation model by the sound processing device 40 from the sound learning device 50 is performed in accordance with, for example, an instruction of an operator to the sound processing device 40.

The third storage unit 42 stores the sound quality parameter generation model acquired by the acquisition unit 41.

A processing target sound is inputted to the parameter generation unit 43 and the second processing unit 44.

As illustrated in FIG. 19, the parameter generation unit 43 to which the processing target sound is inputted uses the sound quality parameter generation model stored in the third storage unit 42 to generate an optimum sound quality parameter group (that is, a sound quality parameter group whereby the highest sound quality can be obtained when the processing target sound is processed), and outputs the generated optimum sound quality parameter group to the second processing unit 44.

Then, as illustrated in FIG. 19, the second processing unit 44 uses the optimum sound quality parameter group to process the processing target sound and thereby acquires a processed sound, and outputs the acquired processed sound. Since the sound quality parameter group used when the processing target sound is processed in the second processing unit 44 is the optimum sound quality parameter group, the processed sound can obtain the highest sound quality.

<Quantitative evaluation>

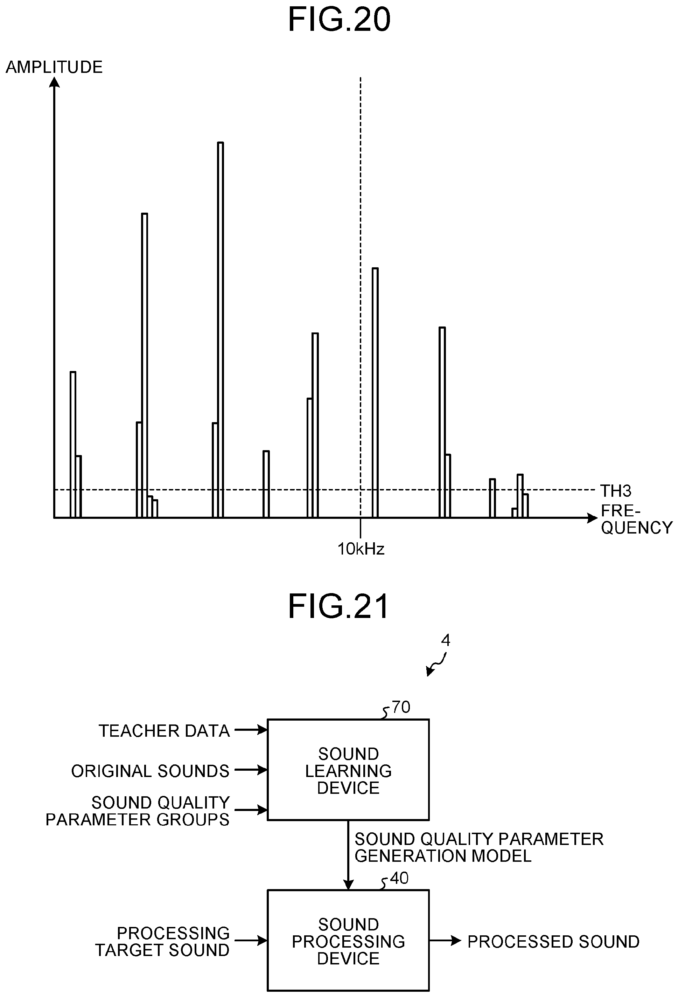

FIG. 20 is a diagram illustrating an example of quantitative evaluation according to the third embodiment of the present disclosure.

The quantitative evaluation of sound quality performed by the first evaluation unit 54 is, for example, an evaluation based on a predetermined point of view that "a processed sound having the highest sound quality is a sound that is not unpleasant" (hereinafter, occasionally referred to as a "third point of view").

The first evaluation unit 54 performs Fourier transformation on each of output sounds AOP1 to AOPN, and thereby generates, for each of output sounds AOP1 to AOPN, a histogram indicating an amplitude value for each frequency band (hereinafter, occasionally referred to as a "frequency histogram"). The frequency histogram indicates frequency characteristics of each of output sounds AOP1 to AOPN. Next, the first evaluation unit 54 compares the amplitude value of each area (hereinafter, occasionally referred to as a "frequency bin") in the frequency histogram and a threshold TH3, and counts the number of frequency bins (hereinafter, occasionally referred to as "high amplitude bins") in which the amplitude value is not less than the threshold TH3 (hereinafter, occasionally referred to as "the number of high amplitude bins"). Next, the first evaluation unit 54 counts the number of, among the plurality of high amplitude bins, frequency bins corresponding to frequencies of 10 kHz or more (hereinafter, occasionally referred to as "the number of high frequency bins"). Then, for each of output sounds AOP1 to AOPN, the first evaluation unit 54 calculates a value obtained by dividing the number of high frequency bins by the number of high amplitude bins according to Formula (2), as each of scores ASC1 to ASCN. Thus, an output sound having a smaller score value is a sound more in line with the third point of view.

Score = the number of high frequency bins/the number of high amplitude bins          (2)

Hereinabove, the third embodiment is described.

[Fourth embodiment]

In a fourth embodiment, like in the third embodiment, the technology of the present disclosure is described using sound data as an example of multimedia data. In the following, differences from the third embodiment are described.

<Configuration of the sound processing system>

FIG. 21 is a diagram illustrating a configuration example of a sound processing system according to the fourth embodiment of the present disclosure. In FIG. 21, a sound processing system 4 includes a sound learning device 70 and a sound processing device 40. The sound learning device 70 uses teacher data, original sounds, and sound quality parameter groups to perform machine learning and thereby generates a sound quality parameter generation model, and outputs the generated sound quality parameter generation model to the sound processing device 40.

<Configuration of the sound learning device>

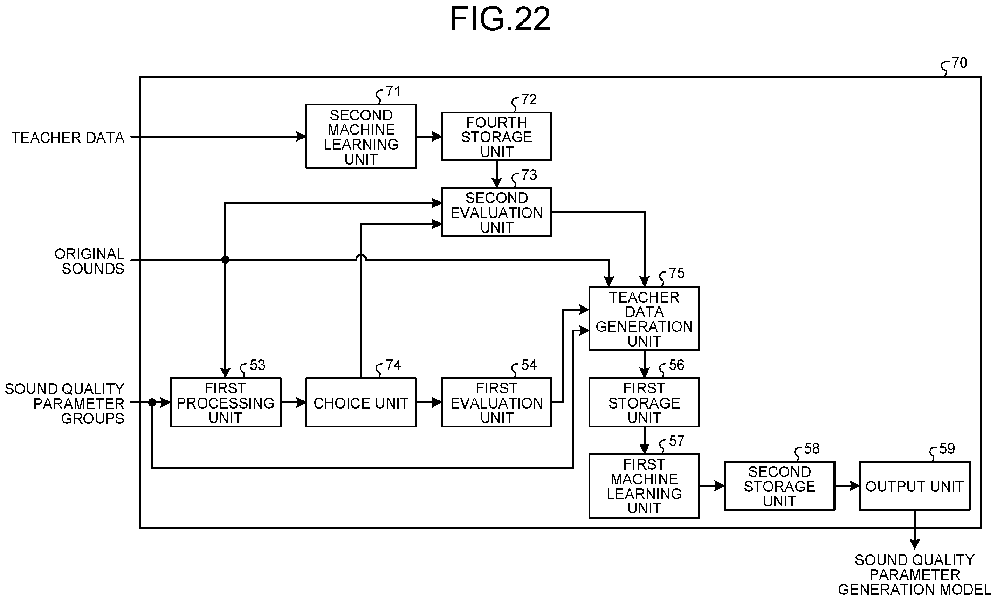

FIG. 22 is a diagram illustrating a configuration example of the sound learning device according to the fourth embodiment of the present disclosure. In FIG. 22, the sound learning device 70 includes a first processing unit 53, a first evaluation unit 54, a first storage unit 56, a first machine learning unit 57, a second storage unit 58, and an output unit 59. The sound learning device 70 further includes a second machine learning unit 71, a fourth storage unit 72, a second evaluation unit 73, a choice unit 74, and a teacher data generation unit 75.

<Processing procedure in the sound processing system>

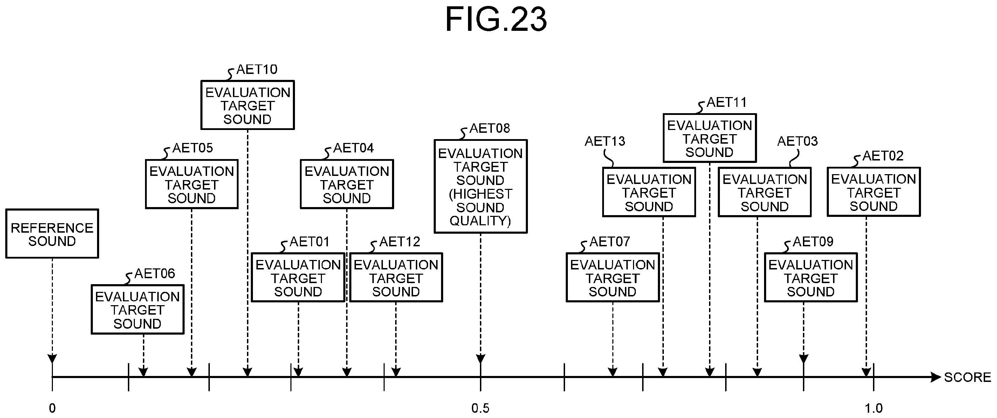

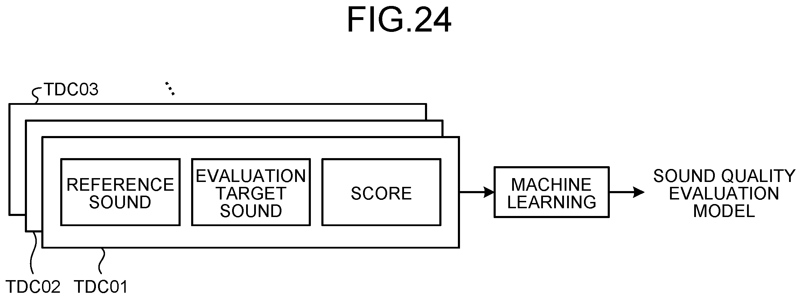

FIGS. 23 and 24 are diagrams illustrating an example of a processing procedure in the sound processing system according to the fourth embodiment of the present disclosure.

Before the sound learning device 70 performs processing in the sound processing system 4, as illustrated in FIG.

23, a human evaluator evaluates an evaluation target sound while actually listening to and comparing a reference sound and the evaluation target sound.

First, the evaluator manually adjusts sound quality parameters, and applies the manually adjusted various sound quality parameters to the reference sound. By the reference sound being processed using the manually adjusted various sound quality parameters, evaluation target sounds, which are sounds after processing, are obtained. FIG. 23 illustrates, as an example, a case where evaluation target sounds AET01 to AET13 are obtained as a result of the reference sound being processed with sound quality parameters of values different from each other.

Then, the evaluator sets the score of the reference sound to "0"; on the other hand, the evaluator adjusts the sound quality parameters in all the obtained evaluation target sounds so that sound quality gradually changes, and sets the score of an evaluation target sound determined to have the highest sound quality to "0.5". Further, the evaluator excessively adjusts the sound quality parameters, and sets the score of an evaluation target sound determined to have the largest degree of change with respect to the reference sound to "1.0". In this way, the evaluator evaluates each evaluation target sound by scoring each evaluation target sound according to subjectivity of the evaluator. As a result, for example, as illustrated in FIG. 23, a score of "0.31" is given to evaluation target sound AET01, "0.99" is given to evaluation target sound AET02, "0.84" is given to evaluation target sound AET03, "0.36" is given to evaluation target sound AET04, "0.18" is given to evaluation target sound AET05, "0.12" is given to evaluation target sound AET06, and "0.66" is given to evaluation target sound AET07. Further, for example, as illustrated in FIG. 23, a score of "0.50" is given to evaluation target sound AET08, "0.90" is given to evaluation target sound AET09, "0.25" is given to evaluation target sound AET10, "0.78" is given to evaluation target sound AET11, "0.41" is given to evaluation target sound AET12, and "0.72" is given to evaluation target sound AET13. That is, in the example illustrated in FIG. 23, while it is determined by subjectivity of the evaluator that evaluation target sound AET08 has the highest sound quality, it is determined that, with the sound quality of evaluation target sound AET08 as the highest sound quality, the sound quality of the evaluation target sound gradually decreases in the order of AET08 → AET12 → AET04 → AET01 → AET10 → AET05 → AET06. Further, it is determined that evaluation target sounds AET07, AET13, AET11, AET03, AET09, and AET02, which have scores larger than 0.5, have undergone excessive sound quality adjustments.

Next, the evaluator associates the reference sound, the evaluation target sound, and the score with each other, and generates teacher data TDC including the reference sound, the evaluation target sound, and the score. Thus, for example, teacher data TDC01 includes the reference sound, evaluation target sound AET01, and "0.31", which is the score of evaluation target sound AET01, while these are associated with each other; teacher data TDC02 includes the reference sound, evaluation target sound AET02, and "0.99", which is the score of evaluation target sound AET02, while these are associated with each other; and teacher data TDC03 includes the reference sound, evaluation target sound AET03, and "0.84", which is the score of evaluation target sound AET03, while these are associated with each other. Similarly, the sets of teacher data TDC04 to TDC13 include the reference sound, evaluation target sounds AET04 to AET13, and the scores of evaluation target sounds AET04 to AET13 while these are associated with each other, respectively.

Then, the plurality of sets of teacher data TDC generated in this way are inputted to the second machine learning unit 71 (FIG. 22). As illustrated in FIG. 24, the second machine learning unit 71 performs machine learning using the plurality of sets of teacher data TDC, and thereby generates a "sound quality evaluation model". Deep learning such as a CNN or an RNN, for example, is used as machine learning when generating the sound quality evaluation model.

The second machine learning unit 71 outputs the sound quality evaluation model generated as illustrated in FIG. 24 to the fourth storage unit 72, and the fourth storage unit 72 stores the sound quality evaluation model generated by the second machine learning unit 71.

After the storage of the sound quality evaluation model in the fourth storage unit 72 is completed, an original sound is inputted to the first processing unit 53, the teacher data generation unit 75, and the second evaluation unit 73, and sound quality parameter groups are inputted to the first processing unit 53 and the teacher data generation unit 75.

Output sounds AOP1 to AOPN outputted from the first processing unit 53 are inputted to the choice unit 74. For each of output sounds AOP1 to AOPN, the choice unit 74 chooses, from the first evaluation unit 54 and the second evaluation unit 73, an evaluation unit that evaluates the sound quality of the output sound (hereinafter, occasionally referred to as a "sound quality evaluation execution unit"). When the choice unit 74 has chosen the first evaluation unit 54 as the sound quality evaluation execution unit, the choice unit 74 outputs, to the first evaluation unit 54, among output sounds AOP1 to AOPN, output sounds of which the sound quality is to be evaluated by the first evaluation unit 54. On the other hand, when the choice unit 74 has chosen the second evaluation unit 73 as the sound quality evaluation execution unit, the choice unit 74 outputs, to the second evaluation unit 73, among output sounds AOP1 to AOPN, output sounds of which the sound quality is to be evaluated by the second evaluation unit 73. That is, the input sounds inputted to the first evaluation unit 54 are output sounds (hereinafter, occasionally referred to as "chosen sounds") chosen by the choice unit 74 among output sounds AOP1 to AOPN, and the input sounds inputted to the second evaluation unit 73 are the original sound and chosen sounds.

The first evaluation unit 54 performs quantitative evaluation on each chosen sound in a similar manner to the third embodiment, and thereby evaluates the sound quality of each chosen sound. Like in the third embodiment, the first evaluation unit 54 performs, on each chosen sound, quantitative evaluation based on a predetermined point of view on sound quality.

On the other hand, the second evaluation unit 73 evaluates each chosen sound by using the sound quality evaluation model stored in the fourth storage unit 72. The evaluation on the chosen sound in the second evaluation unit 73 is performed in a similar manner to the evaluation by the evaluator on evaluation target sounds AET01 to AET13 like that described above.

That is, as described above, the evaluator relatively evaluated evaluation target sounds AET01 to AET13 with respect to the reference sound, and scored each of evaluation target sounds AET01 to AET13. Evaluation target sounds AET01 to AET13 were sounds processed by sound quality parameters different from each other being applied to the same reference sound. Then, in the second machine learning unit 71, a sound quality evaluation model was generated using teacher data TDC including reference sounds, evaluation target sounds, and the scores of the evaluation target sounds while these were associated with each other. On the other hand, an original sound and a chosen sound are inputted to the second evaluation unit 73, and the second evaluation unit 73 evaluates the chosen sound by using the sound quality evaluation model on the basis of the original sound and the chosen sound, and scores the chosen sound. That is, the original sound corresponds to the reference sound in FIG. 23, and the chosen sound corresponds to any of evaluation target sounds AET01 to AET13 in FIG. 23. Therefore, by evaluating the chosen sound by using the sound quality evaluation model generated by the second machine learning unit 71, the second evaluation unit 73 can evaluate the chosen sound with a scale similar to that when the evaluator evaluated each of evaluation target sounds AET01 to AET13.

The second evaluation unit 73 outputs, to the teacher data generation unit 75, a score that is the evaluation result of the chosen sound.

The original sound, sound quality parameter groups APG1 to APGN, and the scores of the chosen sounds (hereinafter, occasionally referred to as "chosen sound scores") are inputted to the teacher data generation unit 75. The chosen sound score is inputted to the teacher data generation unit 75 from either the first evaluation unit 54 or the second evaluation unit 73 chosen by the choice unit 74. As above, each of output sounds AOP1 to AOPN is distributed to either one of the first evaluation unit 54 and the second evaluation unit 73 by the choice unit 74; thus, the total number of chosen sound scores is N, which is the same as the total number of output sounds. Hereinafter, the N chosen sound scores may be referred to as ASSC1 to ASSCN.

The teacher data generation unit 75 selects the best sound quality score from among the inputted chosen sound scores ASSC1 to ASSCN. For example, the teacher data generation unit 75 selects the largest value among scores ASSC1 to ASSCN as the best sound quality score. Next, the teacher data generation unit 75 selects the best sound quality parameter group from among sound quality parameter groups APG1 to APGN. Then, the teacher data generation unit 75 associates the original sound and the best sound quality parameter group with each other, generates teacher data TDD including the original sound and the best sound quality parameter group, and outputs the generated teacher data TDD to the first storage unit 56. The first storage unit 56 stores the teacher data TDD generated by the teacher data generation unit 75.

<Operation of the choice unit>

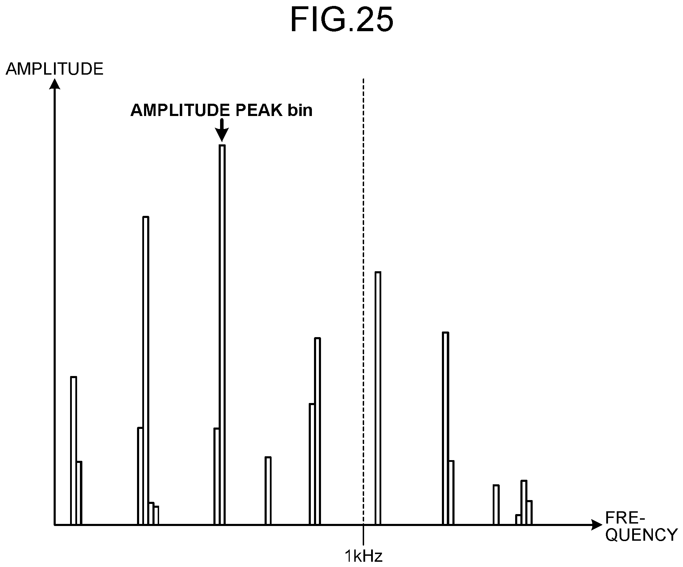

FIG. 25 is a diagram illustrating an operation example of the choice unit according to the fourth embodiment of the present disclosure.

As illustrated in FIG. 25, the choice unit 74 performs Fourier transformation on each of output sounds AOP1 to AOPN, and thereby generates a frequency histogram for each of output sounds AOP1 to AOPN. Next, the choice unit 74 determines a bin having the largest amplitude value (hereinafter, occasionally referred to as an "amplitude peak bin") among the plurality of frequency bins. Next, the choice unit 74 determines a frequency (hereinafter, occasionally referred to as a "peak frequency") to which the amplitude peak bin corresponds. Then, when the peak frequency is not less than 1 kHz, the output sound is clear and the correct answer rate in the second evaluation unit 73 tends to be high, and thus the choice unit 74 chooses the second evaluation unit 73 as the sound quality evaluation execution unit. On the other hand, when the peak frequency is less than 1 kHz, the output sound is unclear and the correct answer rate in the second evaluation unit 73 tends to be low, and thus the choice unit 74 chooses the first evaluation unit 54 as the sound quality evaluation execution unit.

Hereinabove, the fourth embodiment is described.

[Fifth embodiment]

<Hardware configuration>

Each of the first storage units 16 and 56, the second storage units 18 and 58, the third storage units 22 and 42, and the fourth storage units 32 and 72 is implemented by, for example, a storage medium such as a memory or a storage as hardware. Examples of the memory that implements each of the first storage units 16 and 56, the second storage units 18 and 58, the third storage units 22 and 42, and the fourth storage units 32 and 72 include a RAM (random access memory) such as an SDRAM (synchronous dynamic random access memory), a ROM (read-only memory), a flash memory, and the like. Examples of the storage that implements each of the first storage units 16 and 56, the second storage units 18 and 58, the third storage units 22 and 42, and the fourth storage units 32 and 72 include an HDD (hard disk drive), an SSD (solid state drive), and the like.

Each of the first processing units 13 and 53, the first evaluation units 14 and 54, the teacher data generation units 15, 35, 55, and 75, the first machine learning units 17 and 57, the parameter generation units 23 and 43, the second processing units 24 and 44, the second machine learning units 31 and 71, the second evaluation units 33 and 73, and the choice units 34 and 74 is implemented by, for example, a processor as hardware. Examples of the processor that implements each of the first processing units 13 and 53, the first evaluation units 14 and 54, the teacher data generation units 15, 35, 55, and 75, the first machine learning units 17 and 57, the parameter generation units 23 and 43, the second processing units 24 and 44, the second machine learning units 31 and 71, the second evaluation units 33 and 73, and the choice units 34 and 74 include a CPU (central processing unit), a GPU (graphics processing unit), an NPU (neural-network processing unit), a DSP (digital signal processor), an FPGA (field-programmable gate array), an ASIC (application-specific integrated circuit), and the like.

Each of the output units 19 and 59 and the acquisition units 21 and 41 is implemented by, for example, a wired network interface module or a wireless communication module as hardware.

Each of the image learning devices 10 and 30 and the sound learning devices 50 and 70 is implemented as, for example, a computer such as a personal computer or a server. Each of the image processing device 20 and the sound processing device 40 is implemented as, for example, a portable terminal such as a smartphone or a tablet terminal.

[Effects of the disclosed technology]

As hereinabove, a learning device of the present disclosure (the image learning device 10 and the sound learning device 50 of the embodiment) includes a first evaluation unit (the first evaluation units 14 and 54 of the embodiment), a generation unit (the teacher data generation units 15 and 55 of the embodiment), and a first learning unit (the first machine learning units 17 and 57 of the embodiment). The first evaluation unit performs quantitative evaluation on a plurality of pieces of multimedia data, and thereby acquires a plurality of first evaluation results for each of the plurality of pieces of multimedia data. The generation unit, on the basis of the plurality of first evaluation results, selects a second parameter from among a plurality of first parameters having values different from each other, and generates a first set of teacher data including the selected second parameter. The first learning unit performs a first type of machine learning using first sets of teacher data, and thereby generates a first learned model (the image quality parameter generation model and the sound quality parameter generation model of the embodiment) that outputs a third parameter used for processing of multimedia data of a processing target.

For example, the multimedia data is image data, and the first evaluation unit performs quantitative evaluation on the basis of a luminance distribution of image data.

Further, for example, the multimedia data is image data, and the first evaluation unit performs quantitative evaluation on the basis of the average luminance of image data.

Further, for example, the multimedia data is sound data, and the first evaluation unit performs quantitative evaluation on the basis of frequency characteristics of sound data.

On the other hand, a data processing device of the present disclosure (the image processing device 20 and the sound processing device 40 of the embodiment) includes a generation unit (the parameter generation units 23 and 43 of the embodiment) and a processing unit (the second processing units 24 and 44 of the embodiment). The generation unit generates a third parameter by using the learned model (the image quality parameter generation model and the sound quality parameter generation model of the embodiment) generated by the learning device (the image learning devices 10 and 30 and the sound learning devices 50 and 70 of the embodiment). The processing unit uses the generated third parameter to process multimedia data of a processing target.

Thereby, suitable quality parameters can be mechanically (automatically) generated according to various pieces of multimedia data, and therefore the quality of multimedia data can be improved while labor required to determine suitable quality parameters is reduced.

A learning device of the present disclosure (the image learning device 30 and the sound learning device 70 of the embodiment) further includes a second learning unit (the second machine learning units 31 and 71 of the embodiment), a second evaluation unit (the second evaluation units 33 and 73 of the embodiment), and a choice unit (the choice units 34 and 74 of the embodiment). The second learning unit performs a second type of machine learning using second sets of teacher data including second evaluation results for multimedia data of an evaluation target, and thereby generates a second learned model (the image quality evaluation model and the sound quality evaluation model of the embodiment) that outputs a third evaluation result for input multimedia data. The second evaluation unit uses the second learned model to acquire a plurality of third evaluation results for each of a plurality of pieces of multimedia data. The choice unit chooses, from the first evaluation unit and the second evaluation unit, an evaluation execution unit that evaluates a plurality of pieces of multimedia data. The generation unit selects a second parameter from among a plurality of first parameters on the basis of a plurality of first evaluation results obtained when the first evaluation unit is chosen by the choice unit and a plurality of third evaluation results obtained when the second evaluation unit is chosen by the choice unit, and generates a first set of teacher data including the selected second parameter.

For example, the multimedia data is image data, and the choice unit chooses the evaluation execution unit on the basis of a luminance distribution of image data.

Further, for example, the multimedia data is sound data, and the choice unit chooses the evaluation execution unit on the basis of frequency characteristics of sound data.

Thereby, an optimum evaluation execution unit according to multimedia data is chosen, and therefore the quality of multimedia data can be further improved.

The effects described in the present specification are merely examples and are not limitative ones, and there may be other effects.

All or part of each piece of processing in the above description of the image processing systems 1 and 2 and the sound processing systems 3 and 4 may be implemented by causing a processor included in the image processing system 1 or 2 or the sound processing system 3 or 4 to execute a program corresponding to the piece of processing. For example, a program corresponding to each piece of processing in the above description may be stored in a memory, and the program may be read from the memory and executed by a processor. Further, the program may be stored in a program server connected to the image processing system 1 or 2 or the sound processing system 3 or 4 via an arbitrary network, and downloaded from the program server to the image processing system 1 or 2 or the sound processing system 3 or 4 and executed, or may be stored in a recording medium readable by the image processing system 1 or 2 or the sound processing system 3 or 4, and read from the recording medium and executed. Examples of the recording medium readable by the image processing system 1 or 2 or the sound processing system 3 or 4 include portable storage media such as a memory card, a USB memory, an SD card, a flexible disk, a magnetooptical disk, a CD-ROM, a DVD, and a Blu-ray (registered trademark) disk. The program is a data processing method described in an arbitrary language or an arbitrary description method, and the formats of a source code, a binary code, etc. are not questioned. Further, the program is not necessarily limited to a program configured in a single manner, and examples include a program configured in a distributed manner as a plurality of modules or a plurality of libraries and a program that achieves its function in cooperation with a separate program typified by an OS.

The specific forms of distribution and integration of the image processing systems 1 and 2 and the sound processing systems 3 and 4 are not limited to those illustrated, and all or part of the image processing systems 1 and 2 and the sound processing systems 3 and 4 can be configured to be functionally or physically distributed or integrated in arbitrary units according to various additions or the like or according to functional loads.

For example, a configuration in which the acquisition units 21 and 41, the third storage units 22 and 42, and the parameter generation units 23 and 43 illustrated in FIGS. 3 and 16 above are separately from the image processing device 20 or the sound processing device 40 and are provided in a network server may be employed. In this case, the image processing device or the sound processing device from which the acquisition units 21 and 41, the third storage units 22 and 42, and the parameter generation units 23 and 43 are excluded transmits a processing target image or a processing target sound to the network server by using wireless communication or the like. The network server that has received the processing target image or the processing target sound generates an optimum image quality parameter group or an optimum sound quality parameter group, and transmits the generated optimum image quality parameter group or optimum sound quality parameter group to the image processing device or the sound processing device by using wireless communication or the like. The image processing device or the sound processing device that has received the optimum image quality parameter group or the optimum sound quality parameter group processes the processing target image or the processing target sound by using the optimum image quality parameter group or the optimum sound quality parameter group received from the network server and thereby acquires a processed image or a processed sound, and outputs the acquired processed image or processed sound. The above processing is repeated every time a processing target image or a processing target sound is inputted to the image processing device or the sound processing device. Thus, in this case, the network server including the acquisition units 21 and 41, the third storage units 22 and 42, and the parameter generation units 23 and 43 functions as a parameter generation device that generates an optimum image quality parameter group or an optimum sound quality parameter group.

Further, for example, a configuration in which the image processing device 20 and the sound processing device 40 illustrated in FIGS. 3 and 16 above are provided in a network server may be employed. In this case, a communication terminal including a display or a speaker transmits a processing target image or a processing target sound to the network server by using wireless communication or the like. The network server that has received the processing target image or the processing target sound generates an optimum image quality parameter group or an optimum sound quality parameter group, processes the processing target image or the processing target sound by using the generated optimum image quality parameter group or optimum sound quality parameter group and thereby acquires a processed image or a processed sound, and transmits the acquired processed image or processed sound to the communication terminal by using wireless communication or the like. The communication terminal that has received the processed image or the processed sound displays the received processed image on the display or outputs the received processed sound from the speaker. The above processing is repeated every time a processing target image or a processed sound is inputted to the communication terminal.

Reference Signs List

1, 2 IMAGE PROCESSING SYSTEM
10, 30 IMAGE LEARNING DEVICE
20 IMAGE PROCESSING DEVICE
3, 4 SOUND PROCESSING SYSTEM
50, 70 SOUND LEARNING DEVICE
40 SOUND PROCESSING DEVICE
13, 53 FIRST PROCESSING UNIT
14, 54 FIRST EVALUATION UNIT
15, 35, 55, 75 TEACHER DATA GENERATION UNIT
17, 57 FIRST MACHINE LEARNING UNIT
23, 43 PARAMETER GENERATION UNIT
24, 44 SECOND PROCESSING UNIT
31, 71 SECOND MACHINE LEARNING UNIT
33, 73 SECOND EVALUATION UNIT
34, 74 CHOICE UNIT

**Claims**

1. A learning device (10) comprising:

   a first processing unit (13) configured to receive a plurality of original pieces of multimedia data and, for each original piece of multimedia data, receive a respective plurality of multimedia quality parameter groups (PG1-PGN) having values different from each other and to process each original piece of multimedia data using each of the respective multimedia quality parameter groups to acquire a plurality of output pieces of multimedia data (OP1-OPN) for each of the plurality of original pieces of multimedia data;
   a first evaluation unit (14) that performs quantitative evaluation on each of the plurality of output pieces of multimedia data (OP1-OPN) and thereby acquire a plurality of first evaluation results for each of the plurality of output pieces of multimedia data;
   a generation unit (15) that, for each of the plurality of the original pieces of multimedia data, selects a second parameter group from among a plurality of first parameters groups having values different from each other on the basis of the plurality of first evaluation results and associate the second parameter group with the respective original piece of multimedia data and, for each original piece of multimedia data, generates a first set of teacher data including the selected second parameter group;
   a first learning unit (17) that performs a first type of machine learning using first sets of teacher data from each of the original pieces of multimedia data and thereby generate a first learned model that outputs a third parameter used for processing of multimedia data of a processing target;

   a second learning unit that performs a second type of machine learning using second sets of teacher data including second evaluation results for multimedia data of an evaluation target and thereby generates a second learned model that outputs a third evaluation result for input multimedia data;

   a second evaluation unit (33) that receives each of the plurality of original pieces of multimedia data and the plurality of output pieces of multimedia data (OP1-OPN) for each of the plurality of original pieces of multimedia data and uses the second learned model to acquire a plurality of third evaluation results for each of the plurality of output pieces of multimedia data; and

a choice unit that chooses, from the first evaluation unit and the second evaluation unit, an evaluation execution unit that evaluates a plurality of pieces of multimedia data, wherein
the generation unit selects the second parameter group from among the plurality of first parameter groups on the basis of a plurality of first evaluation results obtained when the first evaluation unit is chosen by the choice unit and a plurality of third evaluation results obtained when the second evaluation unit is chosen by the choice unit, and generates the first set of teacher data including the selected second parameter group, wherein either i)
the multimedia data is image data, and
the choice unit chooses the evaluation execution unit on the basis of a luminance distribution of the image data or ii)
the multimedia data is sound data, and
the choice unit chooses the evaluation execution unit on the basis of a frequency characteristic of the sound data.

2.   A data processing device (20) comprising:

a learning device according to claim 1
a generation unit that generates a third parameter by using the learned model generated by the learning device, the third parameter being used for processing of multimedia data of a processing target; and
a processing unit that uses the generated third parameter to process the multimedia data of a processing target.

3.   A computer-implemented learning method comprising:

receiving a plurality of original pieces of multimedia data and, for each original piece of multimedia data, receiving a respective plurality of multimedia quality parameter groups (PG1-PGN) having values different from each other and to process each original piece of multimedia data using each of the respective multimedia quality parameter groups to acquire a plurality of output pieces of multimedia data (OP1-OPN) for each of the plurality of original pieces of multimedia data
performing quantitative evaluation on each of the plurality of pieces of output multimedia data and thereby acquiring a plurality of evaluation results for each of the plurality of output pieces of multimedia data;
for each of the plurality of the original pieces of multimedia data, selecting a second parameter group from among a plurality of first parameter groups having values different from each other on the basis of the plurality of evaluation results;
associate the second parameter group with the respective original piece of multimedia data and, for each original piece of multimedia data, generating a set of teacher data including the selected second parameter group;
performing machine learning using sets of teacher data from each of the original pieces of multimedia data and thereby generating a learned model that outputs a third parameter used for processing of multimedia data of a processing target;
performing a second type of machine learning using second sets of teacher data including second evaluation results for multimedia data of an evaluation target and thereby generates a second learned model that outputs a third evaluation result for input multimedia data;
receiving each of the plurality of original pieces of multimedia data and the plurality of output pieces of multimedia data (OP1-OPN) for each of the plurality of original pieces of multimedia data and uses the second learned model to acquire a plurality of third evaluation results for each of the plurality of output pieces of multimedia data; and
choosing an evaluation execution unit that evaluates a plurality of pieces of multimedia data, wherein
the selection of the second parameter group from among the plurality of first parameter groups is on the basis of a plurality of first evaluation results is chosen and a plurality of third evaluation results when chosen, and generates the first set of teacher data including the selected second parameter group, wherein either i)
the multimedia data is image data, and
the choice is on the basis of a luminance distribution of the image data or ii)
the multimedia data is sound data, and
the choice is on the basis of a frequency characteristic of the sound data.

4.   A data processing method comprising:

a learning method according to claim 3;
generating a third parameter by using the learned model generated by the learning method, the third parameter being used for processing of multimedia data of a processing target, the learned model being configured to output the third parameter; and
using the generated third parameter to process the multimedia data of a processing target.

**Patentansprüche**

1. Lernvorrichtung (10), umfassend:

eine erste Verarbeitungseinheit (13), die konfiguriert ist, um eine Vielzahl von ursprünglichen Stücken von Multimediadaten zu empfangen, und für jedes ursprüngliche Stück von Multimediadaten, eine jeweilige Vielzahl von Multimediaqualitätsparametergruppen (PG1-PGN), die voneinander unterschiedliche Werte aufweisen, zu empfangen und um jedes ursprüngliche Stück von Multimediadaten unter Verwendung jeder der jeweiligen Multimediaqualitätsparametergruppen zu verarbeiten, um eine Vielzahl von Ausgabestücken von Multimediadaten (OP1-OPN) für jedes der Vielzahl von ursprünglichen Stücken von Multimediadaten zu erwerben;
eine erste Bewertungseinheit (14), die quantitative Bewertung an jedem der Vielzahl von Ausgabestücken von Multimediadaten (OP1-OPN) durchführt, und wobei dadurch eine Vielzahl von ersten Bewertungsergebnissen für jedes der Vielzahl von Ausgabestücken von Multimediadaten erworben werden;
eine Erzeugungseinheit (15), die, für jedes der Vielzahl der ursprünglichen Stücke von Multimediadaten, eine zweite Parametergruppe aus einer Vielzahl von ersten Parametergruppen, die voneinander unterschiedliche Werte aufweisen, auf der Basis der Vielzahl von ersten Bewertungsergebnissen auswählt und die zweite Parametergruppe mit dem jeweiligen ursprünglichen Stück von Multimediadaten verknüpft und, für jedes ursprüngliche Stück von Multimediadaten, einen ersten Satz von Lehrerdaten, einschließlich der ausgewählten zweiten Parametergruppe, erzeugt;
eine erste Lerneinheit (17), die eine erste Art maschinellen Lernens unter Verwendung erster Sätze von Lehrerdaten von jedem der ursprünglichen Stücke von Multimediadaten durchführt, und wobei dadurch ein erstes gelerntes Modell erzeugt wird, das einen dritten Parameter, der zum Verarbeiten von Multimediadaten eines Verarbeitungsziels verwendet wird, ausgibt;
eine zweite Lerneinheit, die eine zweite Art maschinellen Lernens unter Verwendung zweiter Sätze von Lehrerdaten, einschließlich zweiter Bewertungsergebnisse für Multimediadaten eines Bewertungsziels, durchführt, und wobei dadurch ein zweites gelerntes Modell, das ein drittes Bewertungsergebnis für eingegebene Multimediadaten ausgibt, erzeugt wird;
eine zweite Bewertungseinheit (33), die jedes der Vielzahl von ursprünglichen Stücken von Multimediadaten und der Vielzahl von Ausgabestücken von Multimediadaten (OP1-OPN) für jedes der Vielzahl von ursprünglichen Stücken von Multimediadaten empfängt und das zweite gelernte Modell verwendet, um eine Vielzahl von dritten Bewertungsergebnissen für jedes der Vielzahl von Ausgabestücken von Multimediadaten zu erwerben; und
eine Wahleinheit, die, aus der ersten Bewertungseinheit und der zweiten Bewertungseinheit, eine Bewertungsausführungseinheit, die eine Vielzahl von Stücken von Multimediadaten bewertet, wählt, wobei
die Erzeugungseinheit die zweite Parametergruppe aus der Vielzahl von ersten Parametergruppen auf der Basis einer Vielzahl von ersten Bewertungsergebnissen, die erhalten werden, wenn die erste Bewertungseinheit durch die Wahleinheit gewählt wird, und einer Vielzahl von dritten Bewertungsergebnissen, die erhalten werden, wenn die zweite Bewertungseinheit durch die Wahleinheit gewählt wird, auswählt und den ersten Satz von Lehrerdaten, einschließlich der ausgewählten zweiten Parametergruppe, erzeugt, wobei entweder i)
die Multimediadaten Bilddaten sind und
die Wahleinheit die Bewertungsausführungseinheit auf der Basis einer Leuchtdichteverteilung der Bilddaten wählt, oder ii)
die Multimediadaten Tondaten sind und
die Wahleinheit die Bewertungsausführungseinheit auf der Basis eines Frequenzmerkmals der Tondaten wählt.

2. Datenverarbeitungsvorrichtung (20), umfassend:

eine Lernvorrichtung nach Anspruch 1
eine Erzeugungseinheit, die einen dritten Parameter durch Verwenden des gelernten Modells erzeugt, das durch die Lernvorrichtung erzeugt wird, wobei der dritte Parameter zum Verarbeiten von Multimediadaten eines Verarbeitungsziels verwendet wird; und
eine Verarbeitungseinheit, die den erzeugten dritten Parameter verwendet, um die Multimediadaten eines Verarbeitungsziels zu verarbeiten.

3. Computerimplementiertes Lernverfahren, umfassend:

Empfangen einer Vielzahl von ursprünglichen Stücken von Multimediadaten, und für jedes ursprüngliche Stück von Multimediadaten, Empfangen einer jeweiligen Vielzahl von Multimediaqualitätsparametergruppen (PG1-PGN), die voneinander unterschiedliche Werte aufweisen, und Verarbeiten jedes ursprünglichen Stücks von Multimediadaten unter Verwendung jeder der jeweiligen Multimediaqualitätsparametergruppen, um eine Vielzahl von Ausgabestücken von Multimediadaten (OP1-OPN) für jedes der Vielzahl von ursprünglichen Stücken von Multimediadaten zu erwerben

Durchführen quantitativer Bewertung an jedem der Vielzahl von Stücken von Ausgabemultimediadaten, und wobei dadurch eine Vielzahl von Bewertungsergebnissen für jedes der Vielzahl von Ausgabestücken von Multimediadaten erworben werden;

für jedes der Vielzahl der ursprünglichen Stücke von Multimediadaten, Auswählen einer zweiten Parametergruppe aus einer Vielzahl von ersten Parametergruppen, die voneinander unterschiedliche Werte aufweisen, auf der Basis der Vielzahl von Bewertungsergebnissen;

Verknüpfen der zweiten Parametergruppe mit dem jeweiligen ursprünglichen Stück von Multimediadaten, und für jedes ursprüngliche Stück von Multimediadaten, Erzeugen eines Satzes von Lehrerdaten, einschließlich der ausgewählten zweiten Parametergruppe;

Durchführen maschinellen Lernens unter Verwendung von Sätzen von Lehrerdaten von jedem der ursprünglichen Stücke von Multimediadaten, und wobei dadurch ein gelerntes Modell erzeugt wird, das einen dritten Parameter, der zum Verarbeiten von Multimediadaten eines Verarbeitungsziels verwendet wird, ausgibt;

Durchführen einer zweiten Art maschinellen Lernens unter Verwendung zweiter Sätze von Lehrerdaten, einschließlich zweiter Bewertungsergebnisse für Multimediadaten eines Bewertungsziels, und wobei dadurch ein zweites gelerntes Modell, das ein drittes Bewertungsergebnis für eingegebene Multimediadaten ausgibt, erzeugt wird;

Empfangen jedes der Vielzahl von ursprünglichen Stücken von Multimediadaten und der Vielzahl von Ausgabestücken von Multimediadaten (OP1-OPN) für jedes der Vielzahl von ursprünglichen Stücken von Multimediadaten und Verwenden des zweiten gelernten Modells, um eine Vielzahl von dritten Bewertungsergebnissen für jedes der Vielzahl von Ausgabestücken von Multimediadaten zu erwerben; und

Wählen einer Bewertungsausführungseinheit, die eine Vielzahl von Stücken von Multimediadaten bewertet, wobei

die Auswahl der zweiten Parametergruppe aus der Vielzahl von ersten Parametergruppen auf der Basis einer Vielzahl von ersten Bewertungsergebnissen gewählt wird, und einer Vielzahl von dritten Bewertungsergebnissen, wenn gewählt, erfolgt und der erste Satz von Lehrerdaten, einschließlich der ausgewählten zweiten Parametergruppe, erzeugt wird, wobei entweder i)

die Multimediadaten Bilddaten sind und

die Wahl auf der Basis einer Leuchtdichteverteilung der Bilddaten erfolgt oder ii)

die Multimediadaten Tondaten sind und

die Wahl auf der Basis eines Frequenzmerkmals der Tondaten erfolgt.

4. Datenverarbeitungsverfahren, umfassend:

ein Lernverfahren nach Anspruch 3;

Erzeugen eines dritten Parameters durch Verwenden des gelernten Modells, das durch das Lernverfahren erzeugt wird, wobei der dritte Parameter zum Verarbeiten von Multimediadaten eines Verarbeitungsziels verwendet wird, wobei das gelernte Modell konfiguriert ist, um den dritten Parameter auszugeben; und

Verwenden des erzeugten dritten Parameters, um die Multimediadaten eines Verarbeitungsziels zu verarbeiten.

## Revendications

1. Dispositif d'apprentissage (10) comprenant :

une première unité de traitement (13) configurée pour recevoir une pluralité d'éléments originaux de données multimédias et, pour chaque élément original de données multimédias, recevoir une pluralité respective de groupes de paramètres de qualité multimédia (PG1-PGN) ayant des valeurs différentes les unes des autres et pour traiter chaque élément original de données multimédias à l'aide de chacun des groupes de paramètres de qualité multimédia respectifs pour acquérir une pluralité d'éléments de sortie de données multimédias (OP1-OPN) pour chacun parmi la pluralité d'éléments originaux de données multimédias ;

une première unité d'évaluation (14) qui met en œuvre une évaluation quantitative sur chacun parmi la pluralité d'éléments de sortie de données multimédias (OP1-OPN) et acquiert de ce fait une pluralité de premiers résultats d'évaluation pour chacun parmi la pluralité d'éléments de sortie de données multimédias ;

une unité de génération (15) qui, pour chacun parmi la pluralité d'éléments originaux de données multimédias, sélectionne un groupe de deuxièmes paramètres parmi une pluralité de groupes de premiers paramètres ayant des valeurs différentes les unes des autres en fonction de la pluralité de premiers résultats d'évaluation et associe le groupe de deuxièmes paramètres à l'élément original de données multimédias respectif et, pour chaque élément original de données multimédias, génère un premier ensemble de données d'enseignement comportant le groupe de deuxièmes paramètres sélectionné ;

une première unité d'apprentissage (17) qui met en œuvre un premier type d'apprentissage automatique à l'aide de premiers ensembles de données d'enseignement provenant de chacun des éléments originaux de données multimédias et génère de ce fait un premier modèle appris qui délivre en sortie un troisième paramètre utilisé pour le traitement de données multimédias d'une cible de traitement ;

une seconde unité d'apprentissage qui met en œuvre un second type d'apprentissage automatique à l'aide de seconds ensembles de données d'enseignement comportant des deuxièmes résultats d'évaluation pour des données multimédias d'une cible d'évaluation et génère de ce fait un second modèle appris qui délivre en sortie un troisième résultat d'évaluation pour des données multimédias d'entrée ;

une seconde unité d'évaluation (33) qui reçoit chacun parmi la pluralité d'éléments originaux de données multimédias et la pluralité d'éléments de sortie de données multimédias (OP1-OPN) pour chacun parmi la pluralité d'éléments originaux de données multimédias et utilise le second modèle appris pour acquérir une pluralité de troisièmes résultats d'évaluation pour chacun parmi la pluralité d'éléments de sortie de données multimédias ; et

une unité de choix qui choisit, parmi la première unité d'évaluation et la seconde unité d'évaluation, une unité d'exécution d'évaluation qui évalue une pluralité d'éléments de données multimédias, dans lequel

l'unité de génération sélectionne le groupe de deuxièmes paramètres parmi la pluralité de groupes de premiers paramètres en fonction d'une pluralité de premiers résultats d'évaluation obtenus lorsque la première unité d'évaluation est choisie par l'unité de choix et une pluralité de troisièmes résultats d'évaluation obtenus lorsque la seconde unité d'évaluation est choisie par l'unité de choix, et génère le premier ensemble de données d'enseignement comportant le groupe de deuxièmes paramètres sélectionné, dans lequel soit i)

les données multimédias sont des données d'image, et

l'unité de choix choisit l'unité d'exécution d'évaluation en fonction d'une distribution de luminance des données d'image soit ii)

les données multimédias sont des données de son, et

l'unité de choix choisit l'unité d'exécution d'évaluation en fonction d'une caractéristique de fréquence des données de son.

2.  Dispositif de traitement de données (20) comprenant :

un dispositif d'apprentissage selon la revendication 1

une unité de génération qui génère un troisième paramètre en utilisant le modèle appris généré par le dispositif d'apprentissage, le troisième paramètre étant utilisé pour le traitement de données multimédias d'une cible de traitement ; et

une unité de traitement qui utilise le troisième paramètre généré pour traiter les données multimédias d'une cible de traitement.

3.  Procédé d'apprentissage implémenté par ordinateur comprenant :

la réception d'une pluralité d'éléments originaux de données multimédias et, pour chaque élément original de données multimédias, la réception d'une pluralité respective de groupes de paramètres de qualité multimédia (PG1-PGN) ayant des valeurs différentes les unes des autres et pour traiter chaque élément original de données multimédias à l'aide de chacun des groupes de paramètres de qualité multimédia respectifs pour acquérir une pluralité d'éléments de sortie de données multimédias (OP1-OPN) pour chacun parmi la pluralité d'éléments originaux de données multimédias,

la mise en œuvre d'une évaluation quantitative sur chacun parmi la pluralité d'éléments de données multimédias de sortie et l'acquisition de ce fait d'une pluralité de résultats d'évaluation pour chacun parmi la pluralité d'éléments de sortie de données multimédias ;

pour chacun parmi la pluralité d'éléments originaux de données multimédias, la sélection d'un groupe de deuxièmes paramètres parmi une pluralité de groupes de premiers paramètres ayant des valeurs différentes les unes des autres en fonction de la pluralité de résultats d'évaluation ;

associer le groupe de deuxièmes paramètres à l'élément original de données multimédias respectif et, pour chaque élément original de données multimédias, la génération d'un ensemble de données d'enseignement comportant le groupe de deuxièmes paramètres sélectionné ;

la mise en œuvre d'un apprentissage automatique à l'aide d'ensembles de données d'enseignement provenant de chacun des éléments originaux de données multimédias et la génération de ce fait d'un modèle appris qui délivre en sortie un troisième paramètre utilisé pour le traitement de données multimédias d'une cible de traitement ;

la mise en œuvre d'un second type d'apprentissage automatique à l'aide de seconds ensembles de données d'enseignement comportant des deuxièmes résultats d'évaluation pour des données multimédias d'une cible d'évaluation et générer de ce fait un second modèle appris qui délivre en sortie un troisième résultat d'évaluation pour des données multimédias d'entrée ;

la réception de chacun parmi la pluralité d'éléments originaux de données multimédias et de la pluralité d'éléments de sortie de données multimédias (OP1-OPN) pour chacun parmi la pluralité d'éléments originaux de données multimédias et utiliser le second modèle appris pour acquérir une pluralité de troisièmes résultats d'évaluation pour chacun parmi la pluralité d'éléments de sortie de données multimédias ; et

le choix d'une unité d'exécution d'évaluation qui évalue une pluralité d'éléments de données multimédias, dans lequel

la sélection du groupe de deuxièmes paramètres parmi la pluralité de groupes de premiers paramètres est en fonction d'une pluralité de premiers résultats d'évaluation est choisie et d'une pluralité de troisièmes résultats d'évaluation lorsque choisie, et générer le premier ensemble de données d'enseignement comportant le groupe de deuxièmes paramètres sélectionné, dans lequel soit i)

les données multimédias sont des données d'image, et

le choix est en fonction d'une distribution de luminance des données d'image soit ii)

les données multimédias sont des données de son, et

le choix est en fonction d'une caractéristique de fréquence des données de son.

4. Procédé de traitement de données comprenant :

un procédé d'apprentissage selon la revendication 3 ;

la génération d'un troisième paramètre en utilisant le modèle appris généré par le procédé d'apprentissage, le troisième paramètre étant utilisé pour le traitement de données multimédias d'une cible de traitement, le modèle appris étant configuré pour délivrer en sortie le troisième paramètre ; et

l'utilisation du troisième paramètre généré pour traiter les données multimédias d'une cible de traitement.

# FIG.1

# FIG.2

ORIGINAL IMAGES

IMAGE QUALITY PARAMETER GROUPS

10

13 FIRST PROCESSING UNIT

14 FIRST EVALUATION UNIT

15 TEACHER DATA GENERATION UNIT

16 FIRST STORAGE UNIT

17 FIRST MACHINE LEARNING UNIT

18 SECOND STORAGE UNIT

19 OUTPUT UNIT

IMAGE QUALITY PARAMETER GENERATION MODEL

# FIG.3

IMAGE QUALITY
PARAMETER
GENERATION MODEL

20

21
ACQUISITION
UNIT

22
THIRD
STORAGE
UNIT

23
PARAMETER
GENERATION
UNIT

24
SECOND
PROCESSING
UNIT

PROCESSING
TARGET IMAGE

PROCESSED
IMAGE

FIG.4

ORIGINAL IMAGES

IMAGE QUALITY PARAMETER GROUP PG1

IMAGE QUALITY PARAMETER GROUP PG2

...

IMAGE QUALITY PARAMETER GROUP PGN

PROCESSING

OUTPUT IMAGE OP1

OUTPUT IMAGE OP2

...

OUTPUT IMAGE OPN

IMAGE QUALITY EVALUATION

SCORE SC1

SCORE SC2

...

SCORE SCN

GENERATE TEACHER DATA

TDB

ORIGINAL IMAGES

BEST IMAGE QUALITY PARAMETER GROUP

# FIG.5

TDB3

TDB2    TDB1

| ORIGINAL IMAGES | BEST IMAGE QUALITY PARAMETER GROUP |

MACHINE LEARNING

IMAGE QUALITY PARAMETER GENERATION MODEL

# FIG.6

IMAGE QUALITY PARAMETER GENERATION MODEL

OPTIMUM IMAGE QUALITY PARAMETER GROUP

PROCESSING TARGET IMAGE

PROCESSING

PROCESSED IMAGE

# FIG.7

PIXEL
OCCUPANCY
(%)

TH1

LUMINANCE

ADD UP

# FIG.8

141

| AVERAGE LUMINANCE OF ORIGINAL IMAGE (0-255) | OPTIMUM AVERAGE LUMINANCE (0-255) |
|---|---|
| NOT LESS THAN 0 AND LESS THAN 10 | 10 |
| NOT LESS THAN 10 AND LESS THAN 40 | 19 |
| NOT LESS THAN 40 AND LESS THAN 100 | 48 |
| NOT LESS THAN 100 AND LESS THAN 150 | 103 |
| NOT LESS THAN 150 AND LESS THAN 200 | 146 |
| NOT LESS THAN 200 AND NOT MORE THAN 255 | 205 |

# FIG.9

# FIG.10

EP 4 422 163 B1

# FIG.11

ET02 EVALUATION TARGET IMAGE

ET03 EVALUATION TARGET IMAGE

ET09 EVALUATION TARGET IMAGE

ET11 EVALUATION TARGET IMAGE

ET13 EVALUATION TARGET IMAGE

ET07 EVALUATION TARGET IMAGE

ET08 EVALUATION TARGET IMAGE (HIGHEST IMAGE QUALITY)

ET04 EVALUATION TARGET IMAGE

ET12 EVALUATION TARGET IMAGE

ET01 EVALUATION TARGET IMAGE

ET10 EVALUATION TARGET IMAGE

ET05 EVALUATION TARGET IMAGE

ET06 EVALUATION TARGET IMAGE

REFERENCE IMAGE

SCORE

0    0.5    1.0

# FIG.12

TDA03

TDA02  TDA01

| REFERENCE IMAGE | EVALUATION TARGET IMAGE | SCORE |
|---|---|---|

→ MACHINE LEARNING → IMAGE QUALITY EVALUATION MODEL

# FIG.13

# FIG.14

## FIG.15

EP 4 422 163 B1

# FIG.16

# FIG.17

EP 4 422 163 B1

# FIG.18

# FIG.19

# FIG.20

# FIG.21

# FIG.22

FIG.23

# FIG.24

EP 4 422 163 B1

# FIG.25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015088805 A
- WO 2020261503 A
- US 10499056 B
- US 2019355376 A